# EUROPEAN PATENT SPECIFICATION

(11) **EP 4 245 945 B1**
(45) Date of publication and mention of the grant of the patent: **12.11.2025**
(21) Application number: 23161758.0
(22) Date of filing: 14.03.2023
(51) Int. Cl.: E04G 21/12

(54) **BINDING DEVICE AND CONSUMABLE ITEM LOADING METHOD**
BINDEVORRICHTUNG UND LADEVERFAHREN FÜR VERBRAUCHSARTIKEL
DISPOSITIF DE LIAISON ET PROCÉDÉ DE CHARGEMENT D'ARTICLE CONSOMMABLE

(30) Priority: 14.03.2022 JP 2022038982
(43) Date of publication of application: 20.09.2023
(73) Proprietor: Max Co., Ltd., Tokyo 103-8502 (JP)
(72) Inventor: ITO, Takahiro, Tokyo, 103-8502 (JP); NODAGUCHI, Yosei, Tokyo, 103-8502 (JP)
(74) Representative: Samson & Partner Patentanwälte mbB

(56) References cited:
- CN-U- 204 826 674
- DE-A1- 4 344 786
- JP-B2- 7 028 581
- US-A1- 2021 354 945

## Description

### TECHNICAL FIELD

The present invention relates to binding device comprising a reinforcing bar binding machine configured to bind reinforcing bars with a wire, and a wire loading method.

### BACKGROUND ART

Reinforcing bars are used in concrete structures to improve a strength, and are bound with wires such that the reinforcing bars do not deviate from a predetermined position when concrete is poured.

In the related art, a binding machine called a reinforcing bar binding machine has been proposed in which a wire is wound around two or more reinforcing bars, the wire wound around the reinforcing bars is twisted, and the two or more reinforcing bars are bound by the wire.

In addition to a binding machine used by hand, there has been proposed a reinforcing bar binding machine connecting structure and a reinforcing bar binding robot in which a reinforcing bar binding machine is held in a robot main body (for example, see Patent Literature 1).

Patent Literature 1: JP2021-49568A

In the reinforcing bar binding robot in the related art, when a reel needs to be replaced, such as when the wire accommodated in a magazine of the reinforcing bar binding machine is consumed, it is necessary to remove the reinforcing bar binding machine from the robot main body and manually replace the reel. Also, in the reinforcing bar binding machine in the related art, when the reel around which the wire is wound needs to be replaced, such as when the wire accommodated in the magazine is consumed, it is necessary to manually replace the reel.
US 2021/0354945 A1 relates to a stamping strip reel replacing system including an autonomous mobile robot and an automatic guide vehicle. Binding devices with a reinforcing bar binding machine, a binding machine mounting unit and a consumable item accommodation unit are further known from CN 204 826 674 U and JP 7 028581 B2.

### SUMMARY OF INVENTION

The present invention has been made to solve such a problem, and an object thereof is to provide a binding device comprising a reinforcing bar binding machine configured to bind reinforcing bars with a wire, and a wire loading method. The invention is defined in the appended independent 1 and 14, with preferred embodiments being described in the dependent claims.

According to an aspect of the present invention, there is provided a binding device according to claim 1.

According to an aspect of the present invention, there is also provided a wire loading method according to claim 14.

### BRIEF DESCRIPTION OF DRAWINGS

Fig. 1A is a perspective view illustrating an example of a binding device according to an embodiment of the invention.
Fig. 1B is a perspective view illustrating an example of the binding device according to the embodiment.
Fig. 1C is a side view illustrating an example of the binding device according to the embodiment.
Fig. 1D is a side view illustrating an example of the binding device according to the embodiment.
Fig. 1E is a front view illustrating an example of the binding device according to the embodiment.
Fig. 2 is a perspective view illustrating an example of a reel replacement unit according to the embodiment.
Fig. 3A is a main-part side view illustrating an example of a lock operation portion according to the embodiment.
Fig. 3B is a main-part side view illustrating an example of the lock operation portion according to the embodiment.
Fig. 3C is a main-part side view illustrating an example of the lock operation portion according to the embodiment.
Fig. 4 is a main-part side view illustrating an example of a wire supply unit according to the embodiment.
Fig. 5 is a main-part front view illustrating an example of a binding machine mounting unit according to the embodiment.
Fig. 6 is a perspective view illustrating an example of a binding device according to the invention including a consumable item loading unit
   according to a first embodiment.
Fig. 7A is a perspective view illustrating an example of a binding device according to the invention including a consumable item loading
   unit according to a second embodiment.
Fig. 7B is a perspective view illustrating an example of the binding device including the consumable item loading unit according to the second embodiment.
Fig. 7C is an enlarged main-part perspective view illustrating an example of the binding device including the consumable item loading unit according to the second embodiment.
Fig. 8A is a perspective view illustrating an example of a binding device according to the invention including a consumable item loading
   unit according to a third embodiment.
Fig. 8B is a perspective view illustrating an example of the binding device including the consumable item loading unit according to the third embodiment.
Fig. 9A is a perspective view illustrating an example of a binding device according to the invention including a consumable item loading
   unit according to a fourth embodiment.
Fig. 9B is a perspective view illustrating an example of the binding device including the consumable item loading unit according to the fourth embodiment.
Fig. 9C is a perspective view illustrating an example of the binding device including the consumable item loading unit according to the fourth embodiment.
Fig. 10 is a side view illustrating an example of a reinforcing bar binding machine according to the embodiment.
Fig. 11A is a side view illustrating an example of a twisting unit.
Fig. 11B is an internal configuration diagram illustrating an example of the twisting unit.
Fig. 11C is a main-part plan view illustrating an example of the twisting unit.
Fig. 11D is a main-part plan view illustrating an example of the twisting unit.
Fig. 12 is a flowchart illustrating an example of a reel replacement operation of the binding device according to the embodiment.
Fig. 13A is an operation explanatory diagram illustrating an example of the reel replacement operation of the binding device according to the embodiment.
Fig. 13B is an operation explanatory diagram illustrating an example of the reel replacement operation of the binding device according to the embodiment.
Fig. 13C is an operation explanatory diagram illustrating an example of the reel replacement operation of the binding device according to the embodiment.
Fig. 13D is an operation explanatory diagram illustrating an example of the reel replacement operation of the binding device according to the embodiment.
Fig. 14 is a configuration diagram illustrating an example of a binding device including an information communication unit.
Fig. 15A is a main-part configuration diagram illustrating an example of a binding device including a loading state detection unit.
Fig. 15B is a front view of a reinforcing bar binding machine illustrating an example of a wire loading position.
Fig. 15C is a main-part front view of the reinforcing bar binding machine illustrating an example of the wire loading position.
Fig. 16A is a perspective view illustrating a first modification of the binding device according to an embodiment of the invention.
Fig. 16B is a perspective view illustrating a second modification of the binding device according to an embodiment of the invention.
Fig. 17 is a perspective view illustrating another modification of the binding device according tc an embodiment of the invention.

### DESCRIPTION OF EMBODIMENTS

Hereinafter, with reference to the drawings, embodiments of a binding device including a binding unit that binds a binding object with a consumable item, and a consumable item loading unit that loads the consumable item into the binding unit, a binding device including a binding machine mounting unit to which a binding machine (binding unit) that binds a binding object with a consumable item is mounted, and a consumable item loading unit that loads the consumable item into the binding machine mounted on the binding machine mounting unit, and a consumable item loading method of loading a consumable item into a binding unit and a binding machine will be described.

In the following embodiments and according to the invention, the binding unit and the binding machine bind the reinforcing bars, which are the binding object, with a wire which is the consumable item. The wire, which is the consumable item, is supplied in a form of being wound around a reel. A consumable item replacement unit, which is an example of the consumable item loading unit, a consumable item replacement device, which is an example of the consumable item loading device, and a consumable item replacement system, which is an example of the consumable item loading system replace a reel that needs to be replaced, such as a reel on which the wire is consumed, with a replacement reel, such as a reel around which a predetermined amount of wire is wound, to load the wire, which is the consumable item.

### <Overall Configuration Example of Binding Device According to Embodiment>

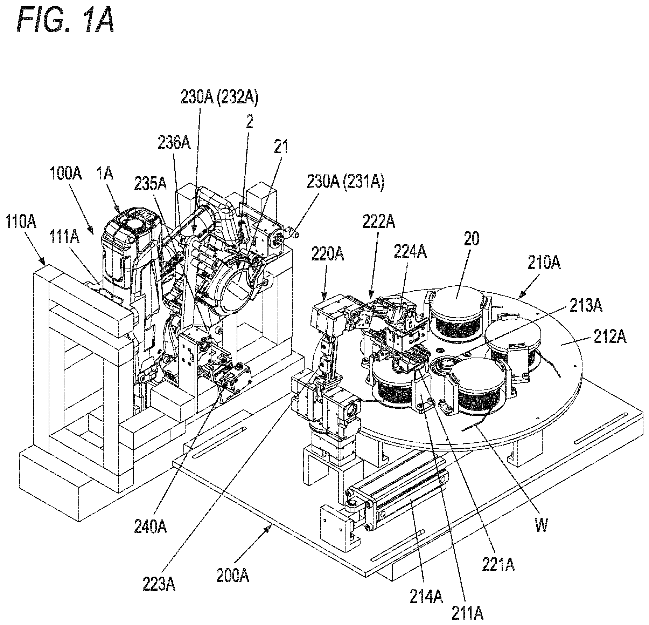

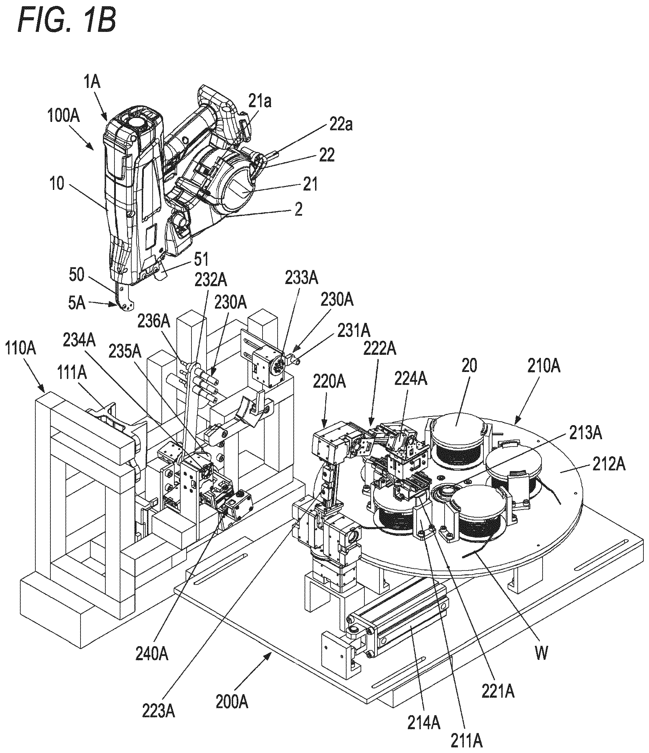

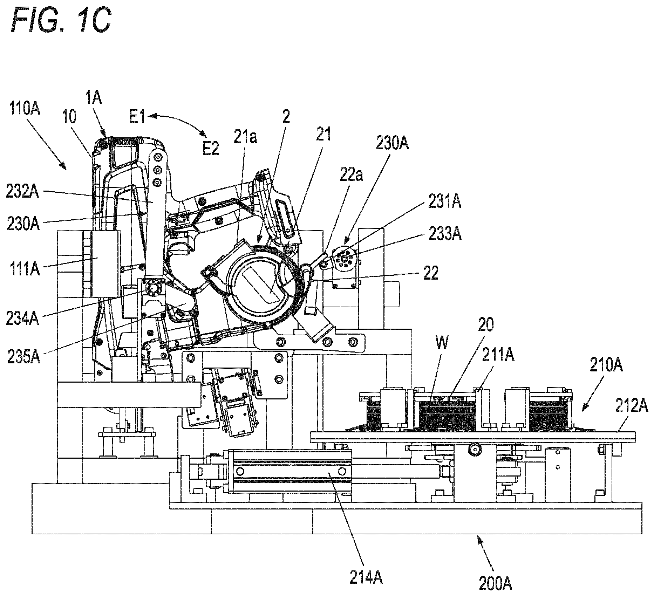

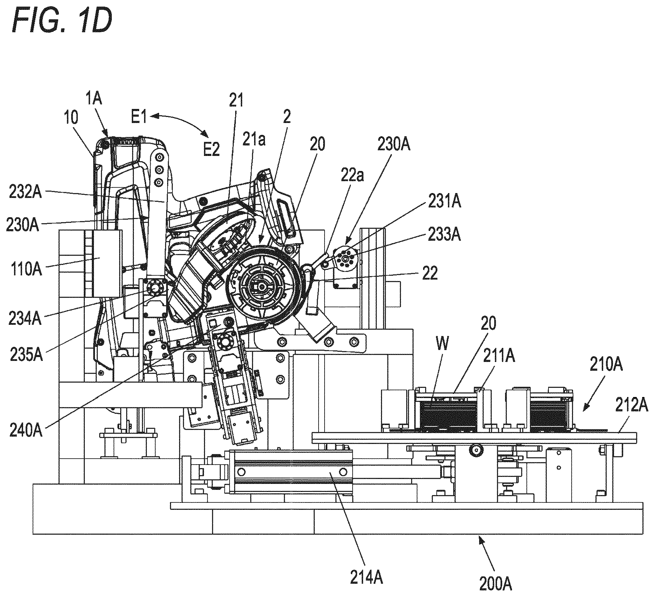

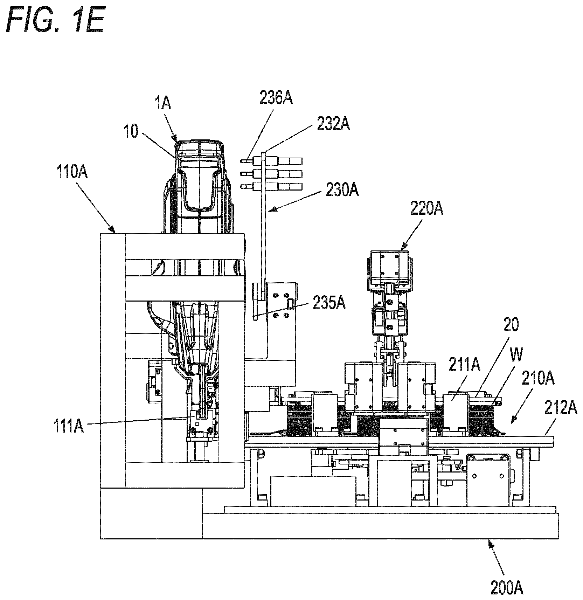

Figs. 1A and 1B are perspective views illustrating an example of a binding device according to the embodiment. Figs. 1C and 1D are side views illustrating an example of the binding device according to the embodiment. Fig. 1E is a front view illustrating an example of the binding device according to the embodiment.

A binding device 100A according to the embodiment includes a reinforcing bar binding machine 1A that binds reinforcing bars S with wires W, and a binding machine mounting unit 1 10A to which the reinforcing bar binding machine 1A is detachably mounted. The binding device 100A includes a reel storage unit 210A in which reels 20 around which the wires W are wound are accommodated, and a reel replacement unit 220A in which the reel 20 accommodated in the reel storage unit 210A is loaded in the reinforcing bar binding machine 1A.

The reinforcing bar binding machine 1A is an example of a binding machine or a binding unit, and includes a magazine 2 in which the wire W, which is a consumable item, is accommodated. The magazine 2 is an example of a consumable item accommodation unit (first accommodation unit), and, as a consumable item carrier that removably carries the consumable item, detachably accommodates the reel 20 around which the wire W is wound. The wire W is not limited to being provided in a form of being wound around the reel 20, and may be in a form in which the wire W is wound only by the wire W itself without using a member serving as a core of the reel 20 or the like, or may be in a form in which only the wire W is detachably accommodated in the magazine 2 without using the consumable item carrier. A magazine in which only the wire W is accommodated or a magazine in which the reel 20 around which the wire W is wound may be used as a wire cartridge detachable from the reinforcing bar binding machine 1A, and an accommodation unit in which the wire cartridge is detachably accommodated in the reinforcing bar binding machine 1A may be used as the consumable item accommodation unit. In such a configuration, the wire cartridge is an example of the consumable item carrier, and is implemented to be capable of removing the wire cartridge accommodated in the reinforcing bar binding machine 1A and loading a desired wire cartridge into the reinforcing bar binding machine 1A.

The magazine 2 includes a lid portion 21 that can be opened and closed, and a lock portion 22 that locks the lid portion 21 in a closed state. The lid portion 21 is opened and closed with respect to the magazine 2 by an opening and closing operation with a hinge portion 21a as a fulcrum, and is biased in a direction in which the lid portion 21 is opened by a spring (not illustrated). The lock portion 22 includes an operated portion 22a that receives a force for operating the lock portion 22. The lock portion 22 receives a force of pressing the operated portion 22a between a closed position at which the lid portion 21 is pressed and held in a closed state and an open position at which the lock portion 22 is retracted from an opening and closing trajectory of the lid portion 21, and moves, for example, in a rotation operation. Details of another configuration of the reinforcing bar binding machine 1A will be described later.

The reel storage unit 210A is an example of a loading consumable item accommodation unit (second accommodation unit), and at least one replacement reel 20 around which the wire W is wound, and in this example, a plurality of reels 20 are detachably accommodated. The reel storage unit 210A includes a storage plate 212A on which storage units 211A of the reels 20 are provided at a plurality of positions, and a drive unit 214A that rotates the storage plate 212A using a shaft 213A as a fulcrum.

The storage unit 211A includes a mechanism that detachably attaches the reel 20 to the storage plate 212A, and is disposed on a concentric circle centered on the shaft 213A. The storage plate 212A is driven by the drive unit 214A and rotates about the shaft 213A as the fulcrum. Accordingly, the reel storage unit 210A may move any storage unit 211A to a pickup position of the reel 20 by the reel replacement unit 220A.

The reel replacement unit 220A is an example of a loading unit, which takes out the used reel 20 accommodated in the magazine 2, and replaces the used reel 20 with the replacement reel 20 accommodated in the reel storage unit 210A, thereby loading the wire W into the reinforcing bar binding machine 1A. The used reel 20 refers to a state in which the wire W is not wound or a state in which the wire W is wound but a remaining amount of the wire W is smaller than a required binding amount necessary for binding the reinforcing bars S. The replacement reel 20 refers to a state in which a sufficient amount of the wire W is wound. The replacement reel 20 may be not only the reel 20 around which a sufficient amount of the wire W of the same type as the wire W wound around the reel 20 loaded in the reinforcing bar binding machine 1A is wound, but also the reel 20 around which a sufficient amount of the wire W of a different type is wound.

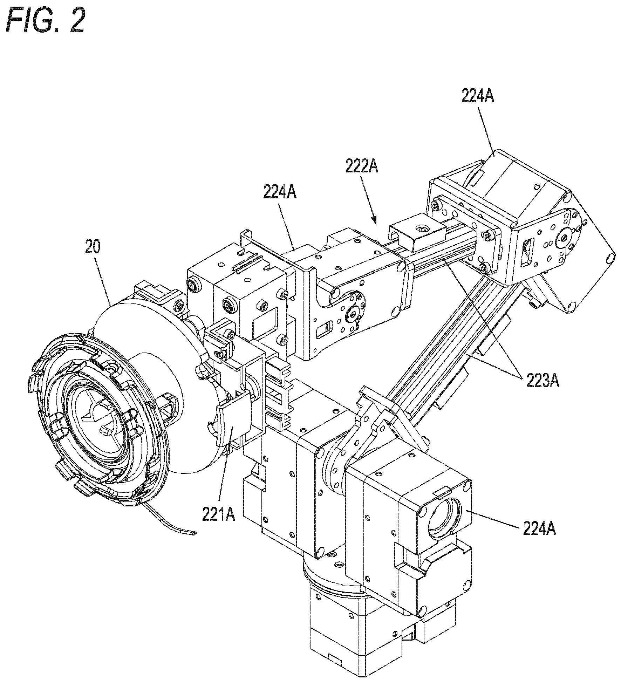

Fig. 2 is a perspective view illustrating an example of the reel replacement unit according to the embodiment. The reel replacement unit 220A includes a holding portion 221A that detachably holds the reel 20 in order to replace the reel 20 accommodated in the magazine 2, and a moving portion 222A that moves the holding portion 221A at least between the magazine 2 of the reinforcing bar binding machine 1A and the reel storage unit 210A.

The holding portion 221A includes, for example, a pair of claw portions that move in a direction toward and a direction away from each other, and holds the reel 20 between the pair of claw portions.

The moving portion 222A is implemented by a multi-joint robot arm in which a plurality of arms 223A are coupled by a joint portion 224A having a rotatable shaft constituted by a servo motor or the like. The moving portion 222A can move the holding portion 221A to the pickup position of the reel 20 accommodated in the reel storage unit 210A and orient a direction of the holding portion 221A in a direction in which the reel 20 accommodated in the reel storage unit 210A can be held.

The moving portion 222A can move the holding portion 221A to a position facing the reel 20 accommodated in the magazine 2 of the reinforcing bar binding machine 1A, and orient the direction of the holding portion 221A in a direction in which the reel 20 accommodated in the magazine 2 can be held.

Further, the moving portion 222A can move the holding portion 221A holding the reel 20 to a position facing the magazine 2 of the reinforcing bar binding machine 1A, and orient the direction of the reel 20 held by the holding portion 221A to a direction in which the reel 20 can be loaded in the magazine 2.

The reel storage unit 210A and the reel replacement unit 220A constitute a consumable item loading unit 200A that loads the wire W, which is a consumable item for the reinforcing bar binding machine 1A, by replacing the reel 20. The reel storage unit 210A and the reel replacement unit 220A may constitute a consumable item loading device as one device. The reel storage unit 210A and the reel replacement unit 220A may be implemented as independent devices, and a reel storage device and a reel replacement device may be combined to constitute a consumable item loading system.

In the configuration including the lid portion 21 capable of opening and closing the magazine 2, the binding device 100A needs to open and close the lid portion 21 in order to execute the operation of replacing the reel 20. Therefore, the binding device 100A includes an opening and closing portion 230A that opens and closes the lid portion 21 of the magazine 2. In this example, the opening and closing portion 230A is provided in the binding machine mounting unit 110A.

The opening and closing portion 230A includes a lock operation portion 231A that operates the lock portion 22 of the lid portion 21, and an opening and closing operation portion 232A that opens and closes the lid portion 21. The opening and closing operation portion 232A includes a lid opening portion 235A that opens the lid portion 21.

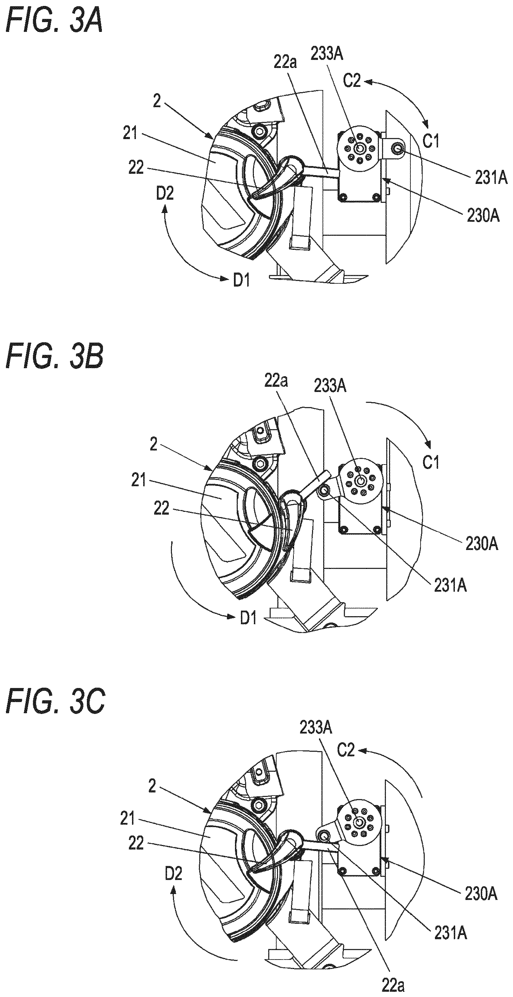

Figs. 3A, 3B, and 3C are main-part side views illustrating an example of the lock operation portion according to the embodiment. The lock operation portion 231A is driven by a drive mechanism (not illustrated) such as a servo motor, and rotates in an arrow C1 direction and an arrow C2 direction which is a reverse direction of C1. The lock operation portion 231 A presses the operated portion 22a of the lock portion 22 in the rotation operation in the arrow C1 direction and the arrow C2 direction to rotate the lock portion 22 in an arrow D1 direction and an arrow D2 direction which is a reverse direction of D1, thereby moving the lock portion 22 between the closed position at which the lid portion 21 is pressed and held in the closed state and the open position at which the lock portion 22 is retracted from the opening and closing trajectory of the lid portion 21.

That is, as illustrated in Fig. 3B, the lock operation portion 231A rotates the lock portion 22 in the arrow D1 direction by pressing the operated portion 22a of the lock portion 22 by the rotation operation in the arrow C1 direction, and thus moves the lock portion 22 to the open position at which the lock portion 22 is retracted from the opening and closing trajectory of the lid portion 21. As illustrated in Fig. 3C, the lock operation portion 231A rotates the lock portion 22 in the arrow D2 direction by pressing the operated portion 22a of the lock portion 22 in the rotation operation in the arrow C2 direction, and thus moves the lock portion 22 to the closed position at which the lid portion 21 in the closed state is pressed and held.

As illustrated in Figs. 3B, 1C, and 1D, when the lock portion 22 is moved to the open position in the operation of the lock operation portion 231A, the lid portion 21 is opened by a force biased by a spring (not illustrated). In a state in which the lid portion 21 is opened by being biased by a spring (not illustrated), the opening and closing operation portion 232A rotates in an arrow E1 direction with a shaft 234A as a rotation shaft. Therefore, as illustrated in Fig. 1D, the lid opening portion 235A enters between the magazine 2 and the lid portion 21 to further open the lid portion 21, and holds the lid portion 21 in the opened state. The opening and closing operation unit 232A rotates in an arrow E2 direction with the shaft 234A as the rotation shaft from the state illustrated in Fig. 1D. Therefore, the opening and closing operation portion 232A presses the lid portion 21 in the opened state in a closing direction of a lid closing portion 236A illustrated in Fig. 1A to close the lid portion 21.

Accordingly, in the opening and closing portion 230A, the lock operation portion 231A operates the lock portion 22 of the lid portion 21 to release the lock on the lid portion 21, and the opening and closing operation portion 232A opens the lid portion 21. In addition, in the opening and closing portion 230A, the opening and closing operation portion 232A closes the open lid portion 21, and the lock operation portion 231A operates the lock portion 22 to lock the lid portion 21 in the closed state.

The binding device 100A includes a wire supply unit 240A that supplies the wire W wound around the reel 20 accommodated in the magazine 2 to the reinforcing bar binding machine 1A. In this example, the wire supply unit 240A is provided in the binding machine mounting unit 110A.

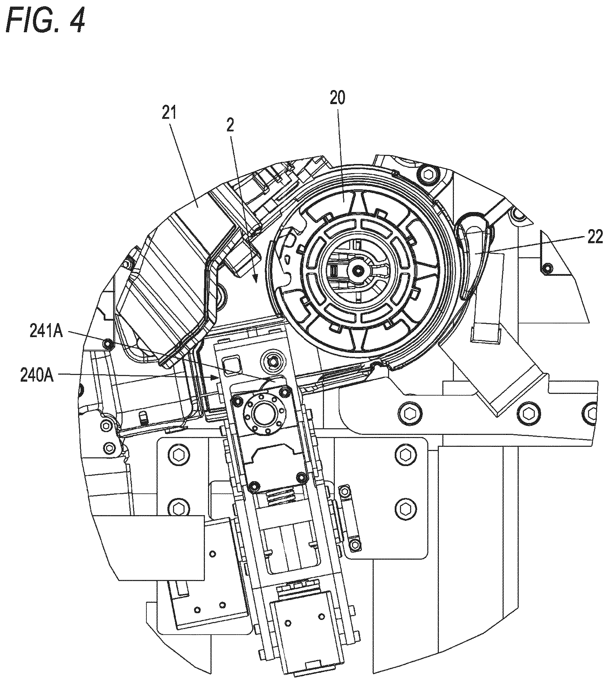

Fig. 4 is a main-part side view illustrating an example of the wire supply unit according to the embodiment. The wire supply unit 240A is an example of a supply unit, and includes a roller 241A that draws out the wire W wound around the reel 20 accommodated in the magazine 2 and loads the wire W into a wire feeding unit, which is to be described later, of the reinforcing bar binding machine 1A, a motor that drives the roller 241A, and the like.

In a state in which the lid portion 21 of the magazine 2 is closed, the wire supply unit 240A is located outside the magazine 2, as illustrated in Figs. 1A and 1B. When the lid portion 21 of the magazine 2 is opened, the wire supply unit 240A moves to inside of the magazine 2 as illustrated in Fig. 4, and the roller 241A is located on a path through which the wire W is fed, and the wire W drawn out from the reel 20 is fed.

The binding machine mounting unit 110A is an example of a mounting unit, and includes a guide portion 111A that defines a position at which the reinforcing bar binding machine 1A is mounted. In the binding machine mounting unit 110A, when the reinforcing bar binding machine 1A is mounted on the guide portion 111A, the lid portion 21 of the magazine 2 is opened and closed by the opening and closing portion 230A described above, and the reel 20 can be replaced by the reel replacement unit 220A.

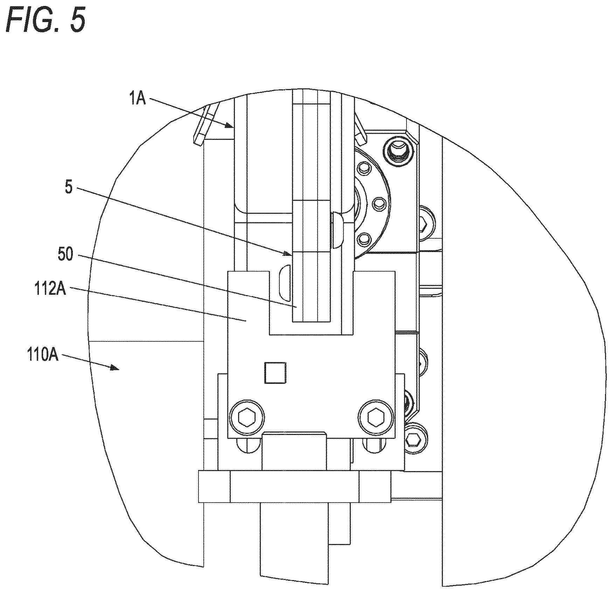

Fig. 5 is a main-part front view illustrating an example of the binding machine mounting unit according to the embodiment. The binding machine mounting unit 110A includes a mounting detection unit 112A that detects whether the reinforcing bar binding machine 1A is mounted. The mounting detection unit 112A includes, for example, a sensor capable of detecting presence or absence of an object, such as an optical sensor. The mounting detection unit 112A can detect the reinforcing bar binding machine 1A mounted on the guide portion 111A of the binding machine mounting unit 110A, and in this example, is provided at a position where a curl guide 50 of a curl forming unit 5 can be detected. The mounting detection unit 112A detects that the reinforcing bar binding machine 1A is mounted on a predetermined position of the binding machine mounting unit 110A by the guide portion 111A, and outputs a binding machine detection signal.

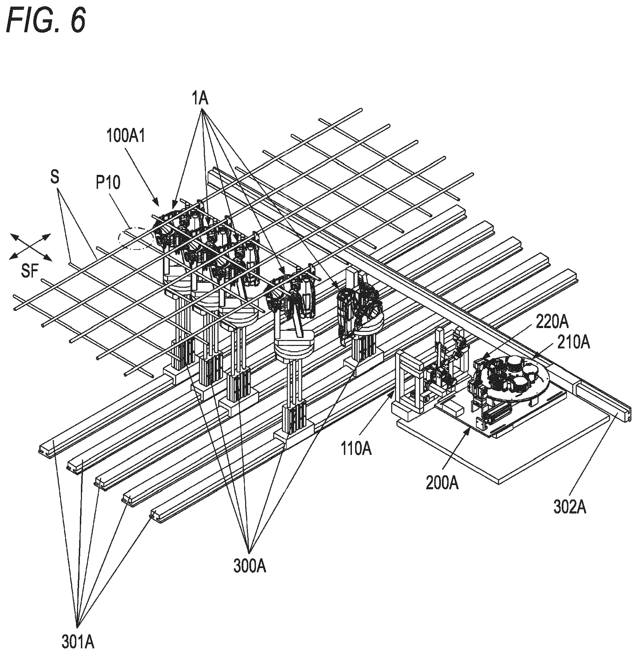

Fig. 6 is a perspective view illustrating an example of a binding device including the above-described consumable item loading unit according to a first embodiment. A binding device 100A1 including the consumable item loading unit 200A includes the above-described binding machine mounting unit 110A, the reel storage unit 210A, and the reel replacement unit 220A.

The binding device 100A1 includes moving machines 300A that move the reinforcing bar binding machines 1A to binding positions P10. The binding positions P10 are intersection points of the reinforcing bars S arranged in a lattice shape.

The moving machine 300A moves the reinforcing bar binding machine 1A to the binding position P10 by moving the reinforcing bar binding machine 1A in a direction toward and a direction away from an arrangement plane SF of the reinforcing bars S.

In the binding device 100Al, a plurality of reinforcing bar binding machines 1A are provided in accordance with intervals of the reinforcing bars S arranged in the lattice shape.

The binding device 100A1 moves each of the reinforcing bar binding machines 1A to a position facing the binding position P10 by moving the reinforcing bars S along the arrangement plane SF in a direction orthogonal to the direction in which the plurality of reinforcing bar binding machines 1A are arranged by another moving machine such as a transport mechanism (not illustrated).

The binding device 100A1 is guided by first guide rails 301A that extend along one extending direction of the reinforcing bars S orthogonal to the direction in which the plurality of reinforcing bar binding machines 1A are arranged, and each of the moving machines 300A is implemented to be movable.

The binding device 100A1 is implemented that the binding machine mounting unit 110A, the reel storage unit 210A, and the reel replacement unit 220A described above are moved by being guided by a second guide rail 302A extending along the other extending direction of the reinforcing bars S parallel to the direction in which the plurality of reinforcing bar binding machines 1A are arranged, and the binding machine mounting unit 110A can move to a position of the reinforcing bar binding machines 1A guided by the first guide rails 301A and moved to a predetermined position by the moving machine 300A. The consumable item loading unit 200A is guided by the second guide rail 302A to move the binding machine mounting unit 110A to a position facing the reinforcing bar binding machine 1A. Then, the moving machine 300A attaches and detaches the reinforcing bar binding machine 1A to and from the binding machine mounting unit 110A by moving the reinforcing bar binding machine 1A in a direction toward and a direction away from the binding machine mounting unit 110A.

The binding device 100A1 may be implemented such that the reinforcing bar binding machine 1A can move to the position of the binding machine mounting unit 110A by being guided by the second guide rail 302A. The moving machine 300A attaches and detaches the reinforcing bar binding machine 1A to and from the binding machine mounting unit 110A by moving the reinforcing bar binding machine 1A, which is guided by the second guide rail 302A, to a position facing the binding machine mounting unit 110A, and moving the reinforcing bar binding machine 1A in the direction toward or in the direction away from the binding machine mounting unit 110A.

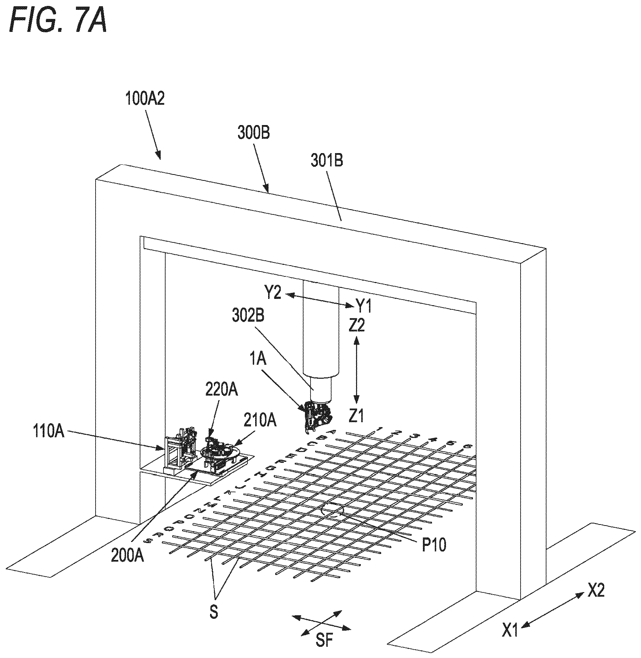

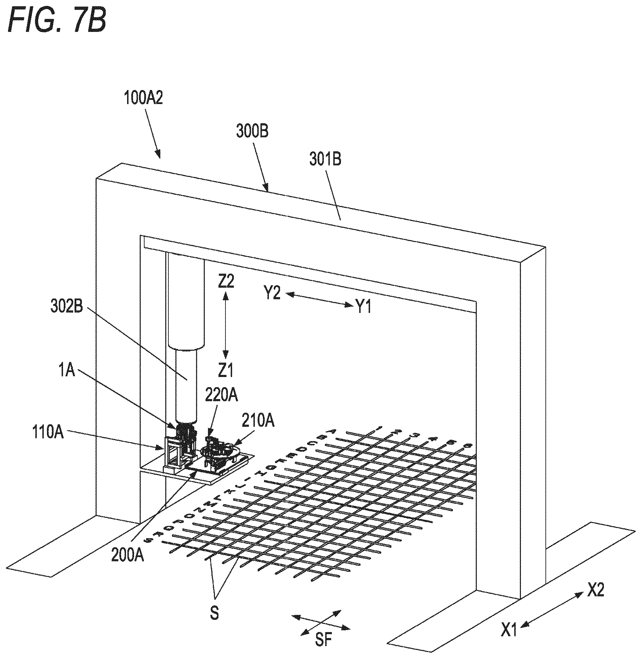

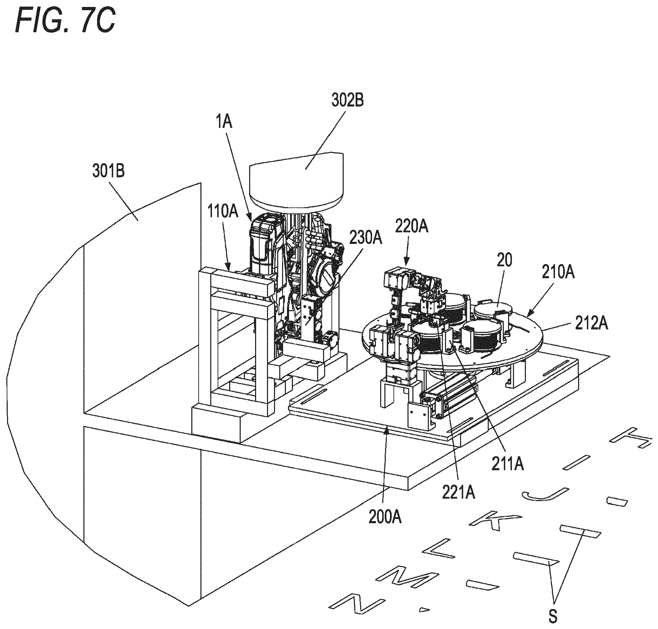

Figs. 7A and 7B are perspective views illustrating an example of a binding device including the above-described consumable item loading unit according to a second embodiment. Fig. 7C is an enlarged main-part perspective view illustrating an example of the binding device including the above-described consumable item loading unit according to the second embodiment. A binding device 100A2 including the consumable item loading unit 200A includes the above-described binding machine mounting unit 110A, the reel storage unit 210A, and the reel replacement unit 220A.

The binding device 100A2 includes a moving machine 300B in which the reinforcing bar binding machine 1A is suspended by a frame 301B. The moving machine 300B is implemented such that the frame 301B is movable in an arrow X1 direction and an arrow X2 direction along one direction of the reinforcing bars S arranged in a lattice shape, and the reinforcing bar binding machine 1A is movable in an arrow Y1 direction and an arrow Y2 direction along the other direction of the reinforcing bars S arranged in the lattice shape. The moving machine 300B includes an elevating machine 302B that moves the reinforcing bar binding machine 1A in an arrow Z1 direction toward the arrangement plane SF of the reinforcing bars S and in an arrow Z2 direction away from the arrangement plane SF.

The moving machine 300B moves the reinforcing bar binding machine 1A to the binding position P10 by moving the reinforcing bar binding machine 1A in the direction toward and the direction away from the arrangement plane SF of the reinforcing bars S in a direction along the arrangement plane SF.

The moving machine 300B moves the reinforcing bar binding machine 1A to a position facing the binding machine mounting unit 110A, and moves the reinforcing bar binding machine 1A in the direction toward and the direction away from the binding machine mounting unit 110A, thereby mounting the reinforcing bar binding machine 1A on the binding machine mounting unit 110A, as illustrated in Figs. 7B and 7C.

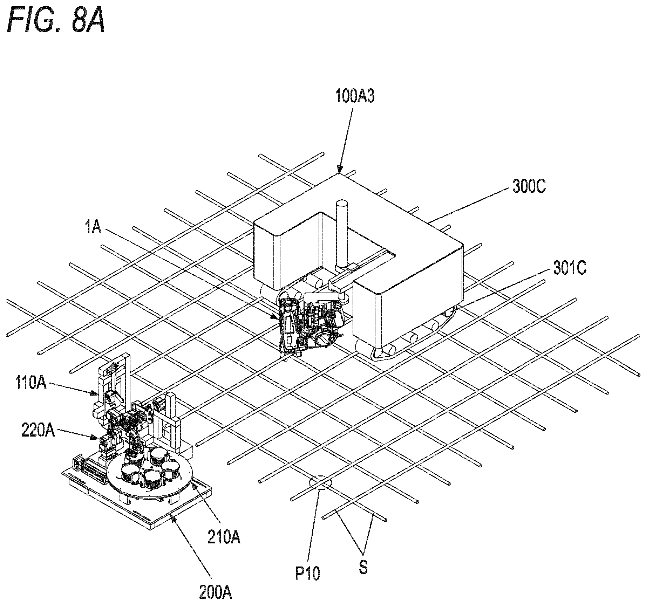

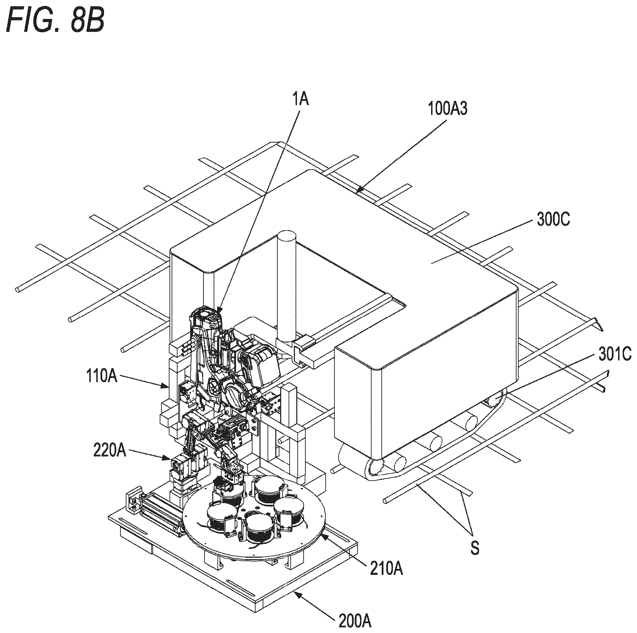

Figs. 8A and 8B are perspective views illustrating an example of a binding device including the above-described consumable item loading unit according to a third embodiment. A binding device 100A3 including the consumable item loading unit 200A includes the above-described binding machine mounting unit 110A, the reel storage unit 210A, and the reel replacement unit 220A.

The binding device 100A3 includes a moving machine 300C that causes the reinforcing bar binding machine 1A to travel along the arrangement plane SF of the reinforcing bars S. The moving machine 300C includes endless tracks 301C that ride on the reinforcing bars S and are driven by a motor (not illustrated). The moving machine 300C moves along an extending direction of the reinforcing bars S by rotation of the endless tracks 301C. By changing the number of rotations of left and right endless tracks 301C, a traveling direction of the moving machine 300C is changed, and the moving machine 300C moves along the extending direction of each of the reinforcing bars S arranged in a lattice shape. Further, the moving machine 300C includes an elevating machine (not illustrated) that moves the reinforcing bar binding machine 1A in a direction toward and a direction away from the arrangement plane SF.

The moving machine 300C moves the reinforcing bar binding machine 1A in the direction along the arrangement plane SF of the reinforcing bars S, and the elevating machine (not illustrated) moves the reinforcing bar binding machine 1A in the direction toward and the direction away from the arrangement plane SF of the reinforcing bars S, thereby moving the reinforcing bar binding machine 1A to the binding position P10.

The moving machine 300C moves the reinforcing bar binding machine 1A to a position facing the binding machine mounting unit 110A, and moves the reinforcing bar binding machine 1A in the direction toward the binding machine mounting unit 110A, thereby mounting the reinforcing bar binding machine 1A on the binding machine mounting unit 110A, as illustrated in Fig. 8B.

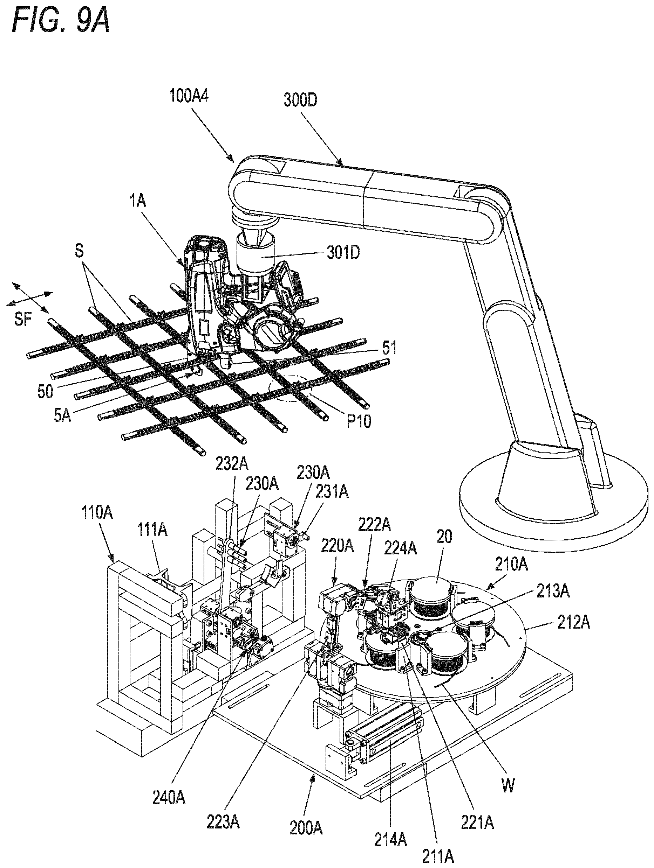

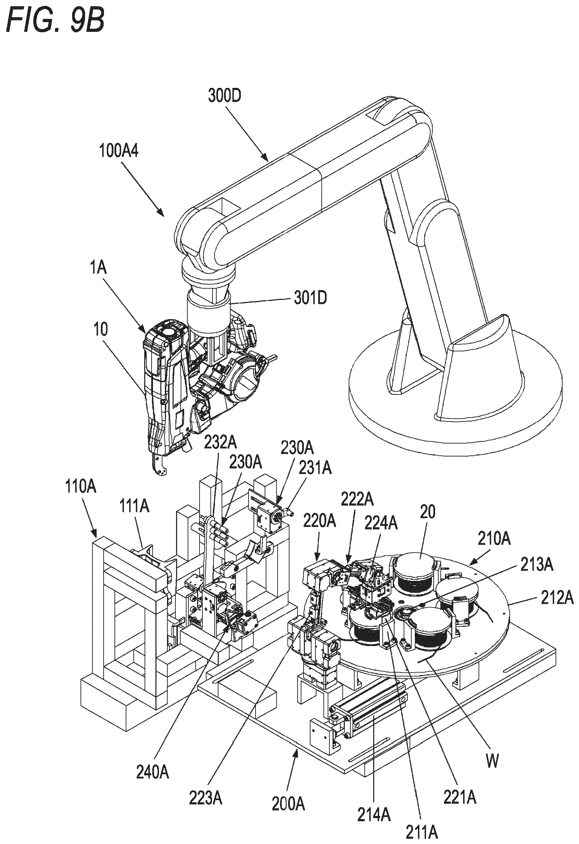

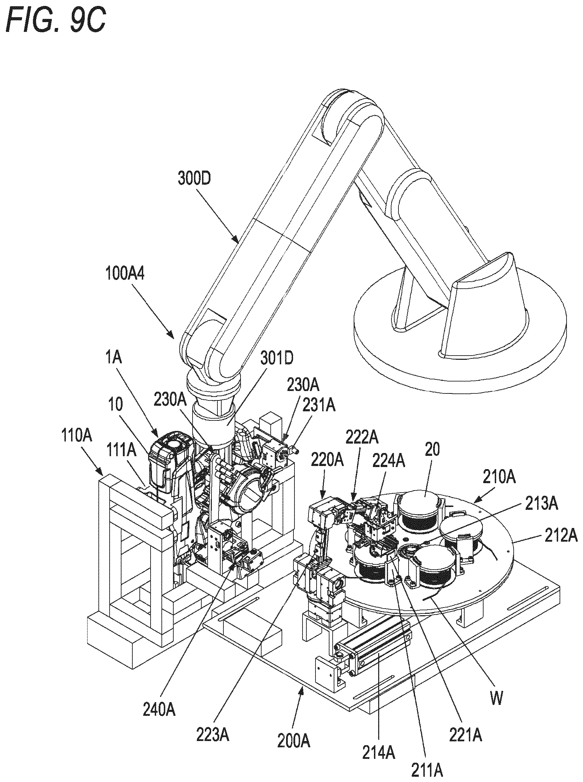

Figs. 9A, 9B, and 9C are perspective views illustrating an example of a binding device including the above-described consumable item loading unit according to a fourth embodiment. A binding device 100A4 including the consumable item loading unit 200A includes the above-described binding machine mounting unit 110A, the reel storage unit 210A, and the reel replacement unit 220A.

The binding device 100A4 includes a moving machine 300D that moves the reinforcing bar binding machine 1A to the binding position P10. Further, the binding device 100A4 includes an attachment and detachment unit 301D to which the reinforcing bar binding machine 1A is detachably attached to the moving machine 300D.

The moving machine 300D is constituted by a device called a robot arm or the like in which a plurality of arms are rotatably coupled to each other via a joint portion constituting a shaft. The moving machine 300D moves the reinforcing bar binding machine 1A to the binding position P10 by moving the reinforcing bar binding machine 1A in the direction toward and the direction away from the arrangement plane SF of the reinforcing bars S in a direction along the arrangement plane SF.

As illustrated in Fig. 9B, the moving machine 300D moves the reinforcing bar binding machine 1A to a position facing the binding machine mounting unit 110A, and moves the reinforcing bar binding machine 1A in the direction toward the binding machine mounting unit 110A, thereby mounting the reinforcing bar binding machine 1A on the binding machine mounting unit 110A, as illustrated in Fig. 9C.

### <Configuration Example of Reinforcing Bar Binding Machine According to Embodiment>

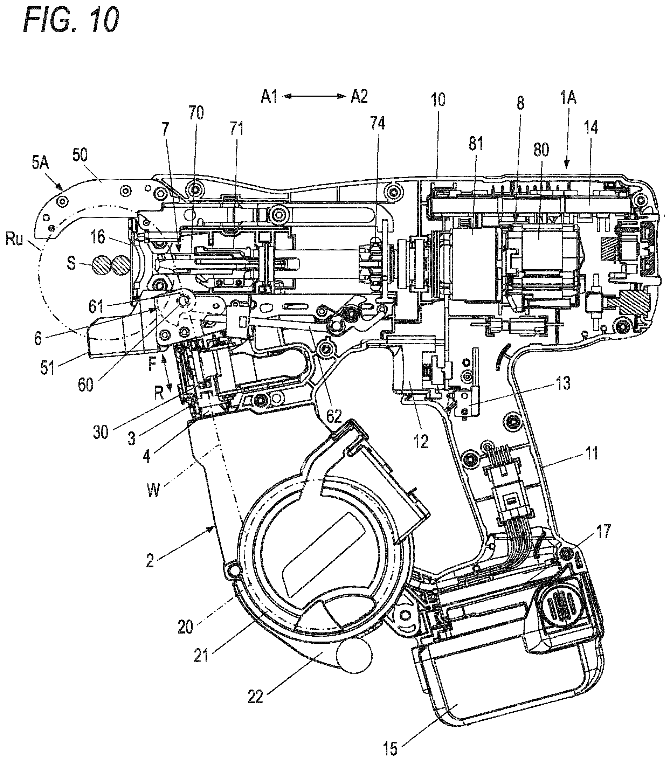

Fig. 10 is a side view illustrating an example of the reinforcing bar binding machine according to the embodiment. The reinforcing bar binding machine 1A binds an intersection point of two intersecting reinforcing bars S with the wire W. In this example, the wire W is wound around the intersection point of the two reinforcing bars S by an operation of feeding the wire W in a forward direction indicated by an arrow F, the wire W wound around the reinforcing bars S is cut after being wound around the reinforcing bars S by an operation of feeding the wire W in a reverse direction indicated by an arrow R, then the wire W is twisted, and the intersection point of the two reinforcing bars S is bound with the wire W.

In order to implement the above-described functions, the reinforcing bar binding machine 1A includes the magazine 2 in which the wire W is accommodated, a wire feeding unit 3 that feeds the wire W in the forward direction and the reverse direction, and wire guides 4 that guide the wire W fed by the wire feeding unit 3. The reinforcing bar binding machine 1 further includes the curl forming unit 5 constituting a path through which the wire W fed by the wire feeding unit 3 is wound around the reinforcing bars S, and a cutting unit 6 that cuts the wire W wound around the reinforcing bars S. Further, the reinforcing bar binding machine 1A includes a twisting unit 7 that twists the wire W wound around the reinforcing bars S, and a drive unit 8 that drives the twisting unit 7.

The magazine 2 rotatably and detachably stores the reel 20 around which the wire W with an elongated shape is wound so as to be delivered out. As the wire W, a wire formed of a metal wire capable of plastic deformation, a wire in which a metal wire is coated with a resin, or a stranded wire is used.

In a configuration in which the reinforcing bars S are bound with a single wire W, the single wire W is wound around a hub portion (not illustrated) of the reel 20, and the single wire W can be drawn out while the reel 20 rotates. In a configuration in which the reinforcing bars S are bound with a plurality of wires W, the plurality of wires W are wound around the hub portion, and the plurality of wires W can be simultaneously drawn out while the reel 20 rotates. For example, in a configuration in which the reinforcing bars S are bound with two wires W, the two wires W are wound around the hub portion, and the two wires W can be simultaneously drawn out while the reel 20 rotates.

The wire feeding unit 3 includes a pair of feeding gears 30 that sandwich and feed the wire W. In the wire feeding unit 3, a rotation operation of a feed motor (not illustrated) is transmitted to rotate the feeding gears 30. Accordingly, the wire feeding unit 3 feeds the wire W sandwiched between the pair of feeding gears 30 along an extending direction of the wire W. In a configuration in which a plurality of, for example, two wires W are fed to bind the reinforcing bars S, the two wires W are fed in a state of being arranged in parallel.

In the wire feeding unit 3, a rotation direction of the feeding gears 30 is switched by switching forward and reverse of a rotation direction of the feed motor, so that the wire W is fed in the forward direction indicated by the arrow F, or the wire W is fed in the reverse direction indicated by the arrow R, or the forward and reverse of the feeding direction of the wire W is switched.

The wire guides 4 are provided at predetermined positions on an upstream side and a downstream side of the wire feeding unit 3 relative to a feeding direction in which the wire W is fed in the forward direction. In the configuration in which the two wires W are fed and the reinforcing bars S are bound, the wire guide 4 provided on the upstream side of the wire feeding unit 3 regulates directions of the two wires W in a radial direction, and guides the two entered wires W between the pair of feeding gears 30 in parallel. The wire guide 4 provided on the downstream side of the wire feeding unit 3 regulates the directions of the two wires W in the radial direction, and guides the two entered wires W to the cutting unit 6 and the curl forming unit 5 in parallel.

The curl forming unit 5 includes the curl guide 50 that curls the wire W fed by the wire feeding unit 3, and a leading guide 51 that leads the wire W curled by the curl guide 50 to the twisting unit 7. In the reinforcing bar binding machine 1, a path of the wire W fed by the wire feeding unit 3 is regulated by the curl forming unit 5, so that a trajectory of the wire W is a loop Ru as indicated by a two-dot chain line in Fig. 10, and the wire W is wound around the reinforcing bars S.

The cutting unit 6 has a configuration in which the wire W is cut by a relative operation of a pair of blade portions, and in this example, includes a fixed blade portion 60 and a movable blade portion 61 that rotates about the fixed blade portion 60 which serves as a fulcrum shaft. In the cutting unit 6, an operation of the twisting unit 7 is transmitted to the movable blade portion 61 via a transmission member 62, and the cutting unit 6 cuts the wire W held between the fixed blade portion 60 and the movable blade portion 61 by a rotation operation of the movable blade portion 61.

The twisting unit 7 includes a locking member 70 that locks the wire W and a sleeve 71 that operates the locking member 70. The drive unit 8 includes a motor 80 and a speed reducer 81 that reduces a speed and amplifies a torque.

When the twisting unit 7 is driven by the drive unit 8, the sleeve 71 operates the locking member 70 to lock the wire W. The twisting unit 7 binds the reinforcing bars S by twisting the wire W after the operation of the sleeve 71 is transmitted to the movable blade portion 61 via the transmission member 62 and the cutting unit 6 cuts the wire W in conjunction with the operation of the sleeve 71.

In the reinforcing bar binding machine 1A, the wire feeding unit 3, the wire guides 4, the cutting unit 6, the twisting unit 7, the drive unit 8, and the like are accommodated inside a main body 10. In the reinforcing bar binding machine 1A, the twisting unit 7 is provided inside a front end side (also referred to as a front side) which is one end portion along an extending direction of the main body 10, and the drive unit 8 is provided inside a rear end side (also referred to as a rear side) which is the other end portion thereof.

In the reinforcing bar binding machine 1A, the curl guide 50 and the leading guide 51 of the curl forming unit 5 are provided at an end portion of the front side of the main body 10. In the reinforcing bar binding machine 1A, an abutting portion 16 against which the reinforcing bars S placed between the curl guide 50 and the leading guide 51 abuts is provided between the curl guide 50 and the leading guide 51 at the end portion of the front side of the main body 10.

Further, in a case where the reinforcing bar binding machine 1A is applied in a form to be used by being held by hand of an operator, a handle portion 11 which can be operated by being held by hand is provided in the main body 10. In the reinforcing bar binding machine 1A, the handle portion 11 extends downward from the main body 10, and a battery attachment portion 17 to which a battery 15 is detachably attached is provided at a lower portion of the handle portion 11. When the reinforcing bar binding machine 1A is used in the binding device 100A illustrated in Fig. 1A or the like, the reinforcing bar binding machine 1A may be supplied with power from the outside without attaching a battery 15. In addition, in the reinforcing bar binding machine 1A, the magazine 2 is provided in front of the handle portion 11.

In the case where the reinforcing bar binding machine 1A is applied in a form to be used by being held by hand of an operator, a trigger 12 is provided on the front side of the handle portion 11, and a switch 13 is provided inside the handle portion 11. In the reinforcing bar binding machine 1A, a control unit 14 controls the motor 80 and the feed motor (not illustrated) in accordance with a state of the switch 13 pressed with an operation of the trigger 12.

In the reinforcing bar binding machine 1A used in the binding device 100A, by providing the trigger 12, the operation of the reinforcing bar binding machine 1A alone can be confirmed. However, the reinforcing bar binding machine 1A used in the binding device 100A may not include the trigger 12 and the switch 13.

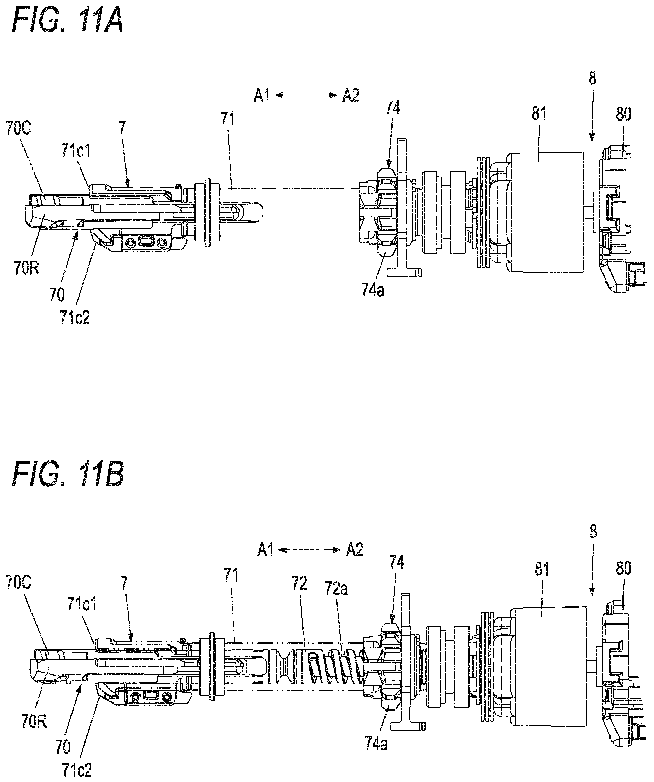

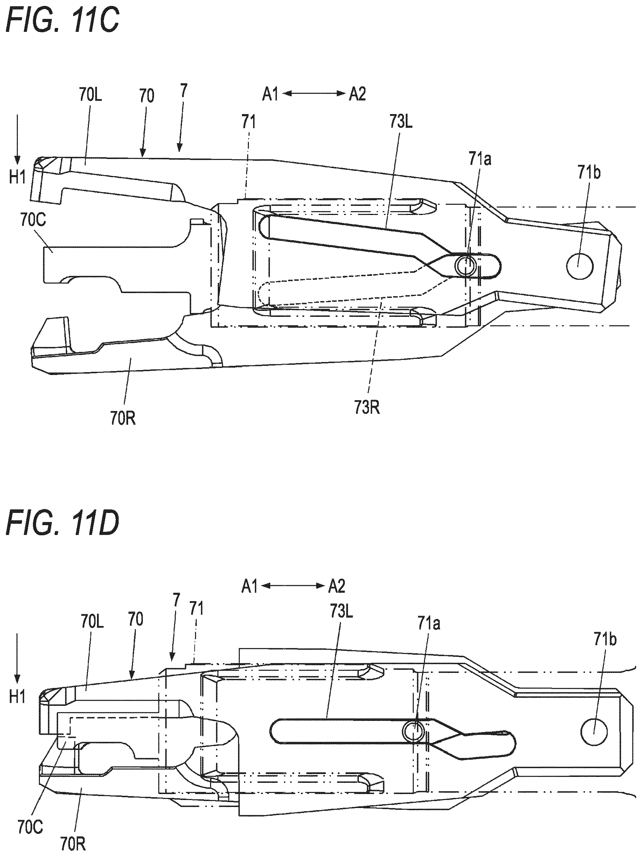

Fig. 11A is a side view illustrating an example of the twisting unit. Fig. 11B is an internal configuration diagram illustrating an example of the twisting unit. Figs. 11C and 11D are main-part plan views illustrating an example of the twisting unit.

Next, the example of the twisting unit 7 according to the embodiment will be described with reference to the drawings. The twisting unit 7 includes a rotation shaft 72 that moves and rotates the sleeve 71 to operate the locking member 70. In the twisting unit 7 and the drive unit 8, the rotation shaft 72 and the motor 80 are coupled to each other via the speed reducer 81, and the rotation shaft 72 is driven by the motor 80 via the speed reducer 81.

The locking member 70 includes a center hook 70C coupled to the rotation shaft 72, and a first side hook 70R and a second side hook 70L that open and close with respect to the center hook 70C.

In the twisting unit 7, a side on which the center hook 70C, the first side hook 70R, and the second side hook 70L are provided is referred to as a front side, and a side on which the rotation shaft 72 is coupled to the speed reducer 81 is referred to as a rear side.

The center hook 70C is coupled to a front end, which is one end portion of the rotation shaft 72, via a configuration that is rotatable with respect to the rotation shaft 72, rotatable integrally with the rotation shaft 72, and movable in an axial direction integrally with the rotation shaft 72.

A front end side of the first side hook 70R, which is one end portion along the axial direction of the rotation shaft 72, is located on one side portion of the center hook 70C. A rear end side of the first side hook 70R, which is the other end portion along the axial direction of the rotation shaft 72, is rotatably supported by the center hook 70C via a shaft 71b.

A front end side of the second side hook 70L, which is one end portion along the axial direction of the rotation shaft 72, is located at the other side portion of the center hook 70C. A rear end side of the second side hook 70L, which is the other end portion along the axial direction of the rotation shaft 72, is rotatably supported by the center hook 70C via the shaft 71b.

Accordingly, the locking member 70 is opened and closed in a direction in which the front end side of the first side hook 70R is separated from and brought into contact with the center hook 70C by a rotation operation with the shaft 71b serving as a fulcrum. Further, the locking member 70 is opened and closed in a direction in which the front end side of the second side hook 70L is separated from and brought into contact with the center hook 70C.

The sleeve 71 has a shape in which a range of a predetermined length along the axial direction of the rotation shaft 72 from an end portion in a forward direction indicated by an arrow A1 is divided into two ranges in a radial direction, and the first side hook 70R and the second side hook 70L are inserted. The sleeve 71 has a tubular shape covering a periphery of the rotation shaft 72, and includes a convex portion (not illustrated) protruding from an inner peripheral surface of a tubular space into which the rotation shaft 72 is inserted. The convex portion enters a groove portion of a feed screw 72a formed along the axial direction on an outer periphery of the rotation shaft 72.

When the rotation shaft 72 rotates, the sleeve 71 moves in a front-rear direction, which is a direction along the axial direction of the rotation shaft 72, in accordance with the rotation direction of the rotation shaft 72 by an action between the convex portion (not illustrated) and the feed screw 72a of the rotation shaft 72. When the sleeve 71 moves to an end portion in a forward direction of the feed screw 72a along the axial direction of the rotation shaft 72, the sleeve 71 rotates integrally with the rotation shaft 72.

The sleeve 71 includes an opening and closing pin 71a that opens and closes the first side hook 70R and the second side hook 70L. The first side hook 70R includes an opening and closing guide hole 73R into which the opening and closing pin 71a is inserted, and the second side hook 70L includes an opening and closing guide hole 73L into which the opening and closing pin 71a is inserted.

The opening and closing guide holes 73R and 73L are formed by grooves extending along a moving direction of the sleeve 71. The opening and closing guide hole 73R has a shape in which a movement in a linear direction of the opening and closing pin 71a that moves in conjunction with the sleeve 71 is converted into an opening and closing operation by rotation of the first side hook 70R with the shaft 71b as a fulcrum. The opening and closing guide hole 73L has a shape in which the movement in the linear direction of the opening and closing pin 71a that moves in conjunction with the sleeve 71 is converted into an opening and closing operation by rotation of the second side hook 70L with the shaft 71b as a fulcrum.

When the sleeve 71 moves to the rear side indicated by an arrow A2, the first side hook 70R and the second side hook 70L move in a direction away from the center hook 70C by the rotation operation with the shaft 71b as a fulcrum due to a trajectory of the opening and closing pin 71a and the shapes of the opening and closing guide holes 73R and 73L.

Accordingly, the first side hook 70R and the second side hook 70L are opened with respect to the center hook 70C, and a feeding path through which the wire W passes is formed between the first side hook 70R and the center hook 70C and between the second side hook 70L and the center hook 70C.

In a state in which the first side hook 70R and the second side hook 70L are opened with respect to the center hook 70C, the wire W fed in the forward direction by the wire feeding unit 3 passes through between the center hook 70C and the first side hook 70R. The wire W that passes between the center hook 70C and the first side hook 70R is guided to the curl forming unit 5. Then, the wire W, which is curled by the curl guide 50 of the curl forming unit 5 and guided to the twisting unit 7 by the leading guide 51, passes between the center hook 70C and the second side hook 70L.

When the sleeve 71 moves to the front side indicated by the arrow A1, the first side hook 70R and the second side hook 70L move in a direction toward the center hook 70C by the rotation operation with the shaft 71b as a fulcrum due to the trajectory of the opening and closing pin 71a and the shapes of the opening and closing guide holes 73R and 73L. Accordingly, the first side hook 70R and the second side hook 70L are closed with respect to the center hook 70C.

When the first side hook 70R is closed with respect to the center hook 70C, the wire W interposed between the first side hook 70R and the center hook 70C is locked so as to be movable between the first side hook 70R and the center hook 70C. When the second side hook 70L is closed with respect to the center hook 70C, the wire W interposed between the second side hook 70L and the center hook 70C is locked so as not to come off from between the second side hook 70L and the center hook 70C.

In an operation of feeding the wire W, which is wound around the reinforcing bars S, in the reverse direction by the wire feeding unit 3, a portion interposed between the second side hook 70L and the center hook 70C is located on the upstream side in a feeding direction of the wire W, and a portion interposed between the first side hook 70R and the center hook 70C is located on the downstream side in the feeding direction of the wire W.

Accordingly, in the operation of feeding the wire W, which is wound around the reinforcing bars S, in the reverse direction by the wire feeding unit 3, the portion interposed between the first side hook 70R and the center hook 70C is pulled in the direction of the wire feeding unit 3, the diameter of the loop Ru is reduced, and the wire is wound around the reinforcing bars S.

The sleeve 71 includes a bent portion 71c1 that forms the wire W into a predetermined shape by pressing and bending the front end side of the wire W in a predetermined direction from the portion interposed between the second side hook 70L and the center hook 70C, the front end side being one end portion of the wire W wound around the reinforcing bars S. In addition, the sleeve 71 includes a bent portion 71c2 that forms the wire W into a predetermined shape by pressing and bending a terminal end side of the wire W in a predetermined direction, the terminal end side being the other end portion of the wire W which is wound around the reinforcing bars S and cut by the cutting unit 6. The bent portion 71c1 and the bent portion 71c2 are formed at an end portion of the sleeve 71 in the forward direction indicated by the arrow A1.

When the sleeve 71 moves in the forward direction indicated by the arrow A1, the front end side of the wire W locked by the center hook 70C and the second side hook 70L is pressed by the bent portion 71c1 and bent toward a reinforcing bar S side. In addition, when the sleeve 71 moves in the forward direction indicated by the arrow A1, the terminal end side of the wire W which is locked by the center hook 70C and the first side hook 70R and cut by the cutting unit 6 is pressed by the bent portion 71c2 and bent toward the reinforcing bar S side.

The twisting unit 7 includes a rotation regulating unit 74 that regulates rotations of the locking member 70 and the sleeve 71 in conjunction with the rotation operation of the rotation shaft 72. The rotation regulating unit 74 includes a rotation regulating blade 74a in the sleeve 71, and includes a rotation regulating pawl (not illustrated) to which the rotation regulating blade 74a is locked in the main body 10.

The rotation regulating blade 74a is implemented by providing, at predetermined intervals in a circumferential direction of the sleeve 71, a plurality of convex portions protruding in the radial direction from an outer periphery of the sleeve 71. The rotation regulating blade 74a is fixed to the sleeve 71, and moves and rotates integrally with the sleeve 71.

In the rotation regulating unit 74, the rotation regulating blade 74a is locked in an operation region where the wire W is locked by the locking member 70, the wire W is wound around the reinforcing bars S and then cut, and further the wire W is bent and formed by the bent portions 71c1 and 71c2 of the sleeve 71. When the rotation regulating blade 74a is locked, the rotation of the sleeve 71 in conjunction with the rotation of the rotation shaft 72 is regulated, and the sleeve 71 moves in the front-rear direction by the rotation operation of the rotation shaft 72.

In the rotation regulating unit 74, locking of the rotation regulating blade 74a is released in an operation region where the wire W locked by the locking member 70 is twisted. When the locking of the rotation regulating blade 74a is released, the sleeve 71 rotates in conjunction with the rotation of the rotation shaft 72. In the locking member 70, the center hook 70C, the first side hook 70R, and the second side hook 70L that lock the wire W rotate in conjunction with the rotation of the sleeve 71.

### <Example of Binding Operation of Reinforcing Bar Binding Machine According to Embodiment>

Next, an operation of binding the reinforcing bars S with the wire W by the reinforcing bar binding machine 1A according to the embodiment will be described with reference to the drawings.

In the reinforcing bar binding machine 1A, a state in which the wire W is sandwiched between the pair of feeding gears 30, and the front end of the wire W is located between the sandwiching position of the feeding gears 30 and the fixed blade portion 60 of the cutting unit 6 is a standby state. In the reinforcing bar binding machine 1A, in the standby state, the sleeve 71 and the first side hook 70R, the second side hook 70L, and the center hook 70C that are attached to the sleeve 71 are moved in a rear direction indicated by the arrow A2, and as illustrated in Fig. 11C, the first side hook 70R is opened with respect to the center hook 70C, and the second side hook 70L is opened with respect to the center hook 70C.

When the feed motor (not illustrated) is driven in a forward rotation direction from the standby state, the wire W is fed in a forward direction indicated by an arrow F by the wire feeding unit 3. In a case of a configuration in which a plurality of, for example, two wires W are fed, the two wires W are fed by the wire guides 4 in a state of being arranged in parallel along the axial direction of the loop Ru formed by the wires W.

The wire W fed in the forward direction passes between the center hook 70C and the first side hook 70R and is fed to the curl guide 50 of the curl forming unit 5. By passing through the curl guide 50, the wire W is curled to be wound around the reinforcing bar S inserted between the curl guide 50 and the leading guide 51.

The wire W curled by the curl guide 50 is guided by the leading guide 51 and further fed in the forward direction by the wire feeding unit 3, so that the wire W is guided between the center hook 70C and the second side hook 70L by the leading guide 51. When the wire W is fed to a predetermined position, driving of the feed motor is stopped.

After the feeding of the wire W in the forward direction is stopped, the motor 80 is driven in the forward rotation direction. In the sleeve 71, in an operation region where the wire W is locked by the locking member 70, rotation of the sleeve 71 in conjunction with the rotation of the rotation shaft 72 is regulated by locking the rotation regulating blade 74a. Accordingly, rotation of the motor 80 is converted into a linear movement, and the sleeve 71 moves in an arrow A1 direction which is the forward direction.

In the locking member 70, when the sleeve 71 moves in the forward direction indicated by the arrow A1, the first side hook 70R and the second side hook 70L move in a direction toward the center hook 70C by the rotation operation with the shaft 71b as a fulcrum due to the trajectory of the opening and closing pin 71a and the shapes of the opening and closing guide holes 73R and 73L.

Accordingly, as illustrated in Fig. 11D, the first side hook 70R and the second side hook 70L are closed with respect to the center hook 70C.

When the first side hook 70R is closed with respect to the center hook 70C, the wire W interposed between the first side hook 70R and the center hook 70C is locked so as to be movable between the first side hook 70R and the center hook 70C.

On the other hand, when the second side hook 70L is closed with respect to the center hook 70C, the wire W interposed between the second side hook 70L and the center hook 70C is locked so as not to come off from between the second side hook 70L and the center hook 70C.

After the sleeve 71 is moved forward to a position where the wire W is locked by the closing operation of the first side hook 70R and the second side hook 70L, the rotation of the motor 80 is temporarily stopped, and the feed motor (not illustrated) is driven in the reverse rotation direction.

Accordingly, the pair of feeding gears 30 are rotated in the reverse direction, and the wire W sandwiched between the pair of feeding gears 30 is fed in the reverse direction indicated by the arrow R. Since the front end side of the wire W is locked so as not to come off from between the second side hook 70L and the center hook 70C, the wire W is wound around the reinforcing bars S by the operation of feeding the wire W in the reverse direction.

After the wire W is wound around the reinforcing bars S and driving of the feed motor in the reverse rotation direction is stopped, the motor 80 is driven in the forward rotation direction to further move the sleeve 71 in the forward direction indicated by the arrow A1.

When the movement of the sleeve 71 in the forward direction is transmitted to the cutting unit 6 by the transmission member 62, the movable blade unit 61 rotates, and the wire W locked by the first side hook 70R and the center hook 70C is cut by the operations of the fixed blade portion 60 and the movable blade portion 61.

By driving the motor 80 in the forward rotation direction, the sleeve 71 is moved in the forward direction indicated by the arrow A1, and as described above, the wire W is cut, and the bent portions 71c1 and 71c2 move in the direction toward the reinforcing bars S substantially at the same time. Accordingly, the front end side of the wire W locked by the center hook 70C and the second side hook 70L is pressed toward the reinforcing bar S side by the bent portion 71c1, and is bent toward the reinforcing bar S side with a locking position as a fulcrum. By further moving the sleeve 71 in the forward direction, the wire W locked between the second side hook 70L and the center hook 70C is held in a state of being interposed by the bent portion 71c1.

The terminal end side of the wire W which is locked by the center hook 70C and the first side hook 70R and cut by the cutting unit 6 is pressed toward the reinforcing bar S side by the bent portion 71c2, and is bent toward the reinforcing bar S side with the locking position as a fulcrum. By further moving the sleeve 71 in the forward direction, the wire W locked between the first side hook 70R and the center hook 70C is held in a state of being interposed by the bent portion 71c2.

After the front end side and the terminal end side after cutting of the wire W are bent toward the reinforcing bars S side, the motor 80 is further driven in the forward rotation direction, so that the sleeve 71 further moves in the forward direction. When the sleeve 71 moves to a predetermined position and reaches the operation region where the wire W locked by the locking member 70 is twisted, the locking of the rotation regulating blade 74a is released.

Accordingly, when the motor 80 is further driven in the forward rotation direction, the sleeve 71 rotates in conjunction with the rotation shaft 72, and the wire W locked by the locking member 70 is twisted.

When it is detected that the load applied to the motor 80 is maximized by twisting the wire W, the normal rotation of the motor 80 is stopped. Next, when the motor 80 is driven in the reverse rotation direction, the rotation shaft 72 rotates in the reverse direction, and the sleeve 71 rotates in the reverse direction following the reverse rotation of the rotation shaft 72, the rotation regulating blade 74a is locked, and thus the rotation of the sleeve 71 in conjunction with the rotation of the rotation shaft 72 is regulated. Accordingly, the sleeve 71 moves in an arrow A2 direction which is the rear direction.

When the sleeve 71 moves in the rear direction, the bent portions 71c1 and 71c2 are separated from the wire W, and the wire W is released from being held by the bent portions 71c1 and 71c2. In addition, when the sleeve 71 moves in the rear direction, the opening and closing pin 71a passes through the opening and closing guide holes 73R and 73L. Accordingly, the first side hook 70R moves in a direction away from the center hook 70C by rotating about the shaft 71b serving as a fulcrum. In addition, the second side hook 70L moves in a direction away from the center hook 70C by rotating about the shaft 71b serving as a fulcrum. Accordingly, the wire W comes off from the locking member 70.

### <Example of Reel Replacement Operation of Binding Device According to Embodiment>

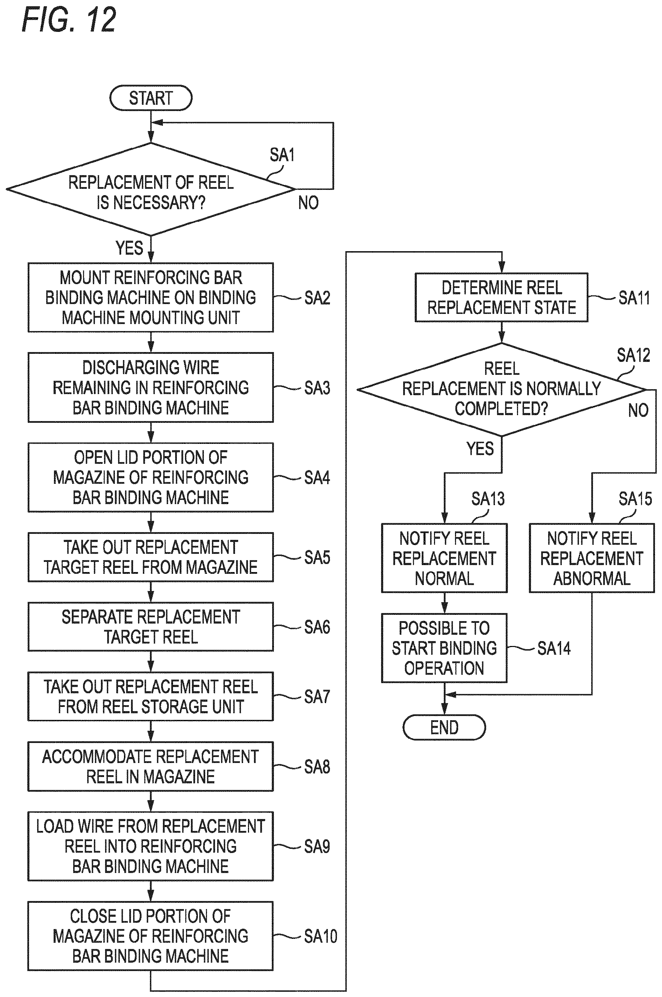

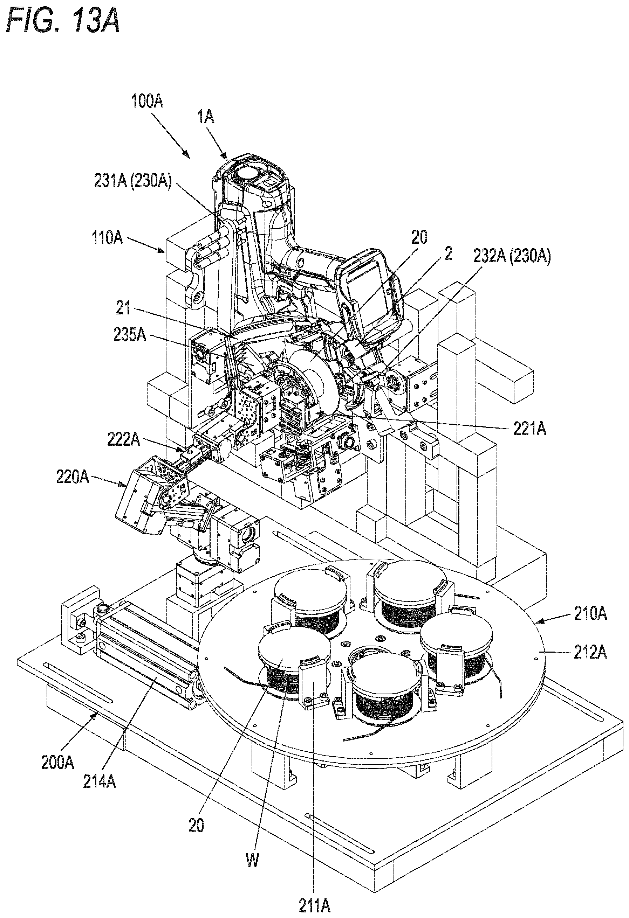

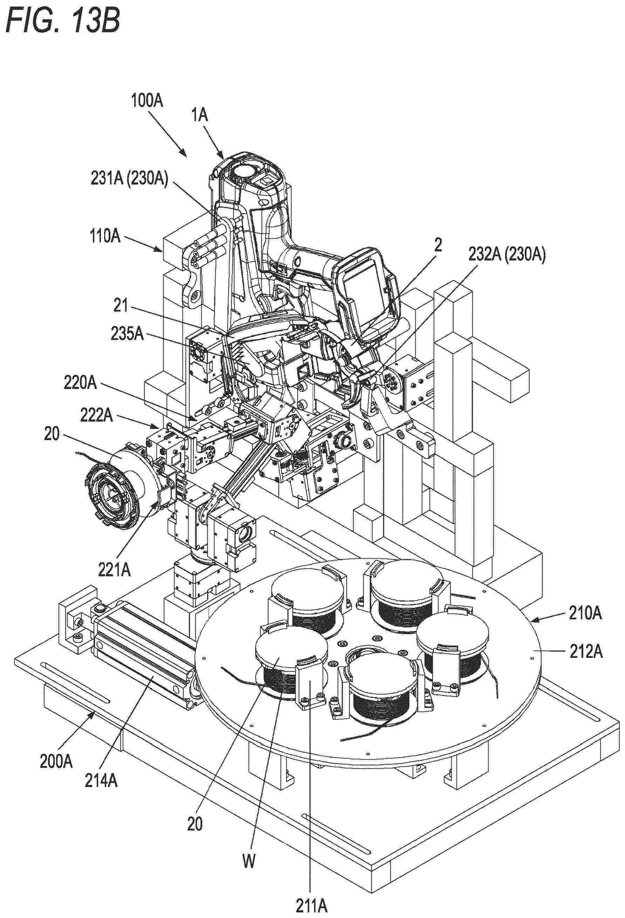

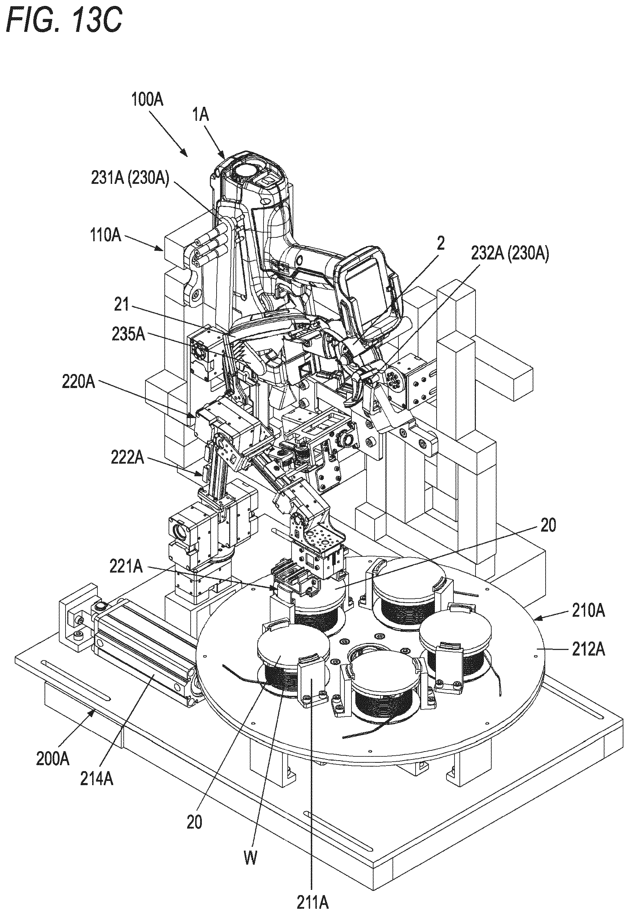

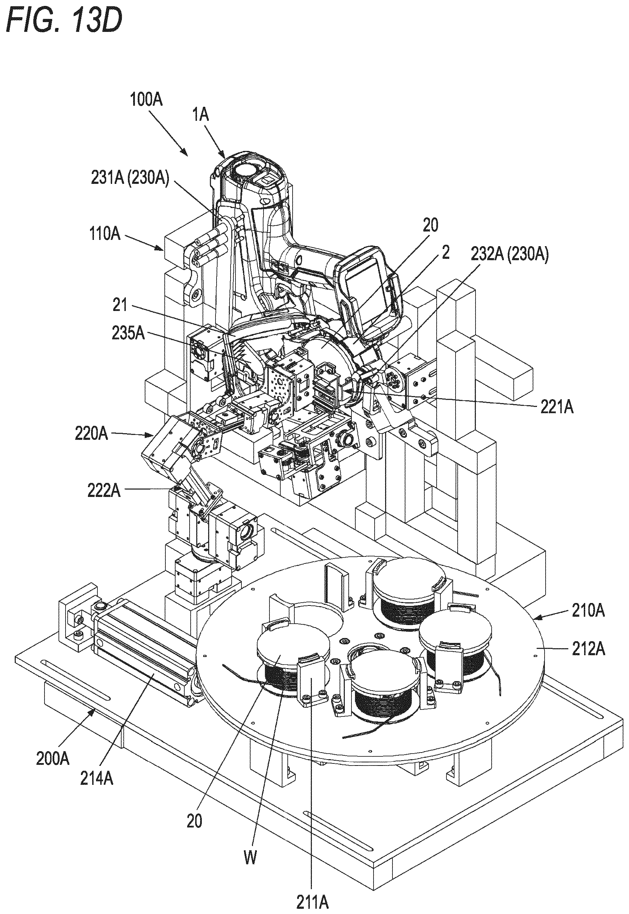

Fig. 12 is a flowchart illustrating an example of a reel replacement operation of the binding device according to the embodiment. Figs. 13A, 13B, 13C, and 13D are operation explanatory diagrams illustrating an example of the reel replacement operation of the binding device according to the embodiment. With reference to the drawings, the reel replacement operation of the binding device will be described as a consumable item loading method according to the embodiment.

In the consumable item loading method according to the embodiment, the reel 20 accommodated in the magazine 2 is taken out based on the state of the wire W as a state of the consumable item, such as a remaining amount of the wire W accommodated in the magazine 2 of the reinforcing bar binding machine 1A, a type of the wire W, and presence or absence of a defect in feeding of the wire W caused by the state of the wire W wound around the reel 20, and is replaced with the replacement reel 20 accommodated in the reel storage unit 210A, thereby loading the wire W, which is a consumable item, in the magazine 2. Details will be described below.

In step SA1 in Fig. 12, the binding device 100A determines whether replacement of the reel 20 is necessary. When the reinforcing bar binding machine 1A determines that the wire W wound around the reel 20 accommodated in the magazine 2 is in a predetermined used state, the reinforcing bar binding machine 1A outputs a reel replacement request signal. Further, when the reinforcing bar binding machine 1A determines that there is an instruction to change the type of the wire W wound around the reel 20 accommodated in the magazine 2 to another type, the reinforcing bar binding machine 1A outputs the reel replacement request signal. Furthermore, when the reinforcing bar binding machine 1A determines that there is a defect in feeding of the wire W, for example, the wire W cannot be drawn out from the reel 20 due to the state of the wire W wound around the reel 20, the reinforcing bar binding machine 1A outputs the reel replacement request signal.

When the binding device 100A receives the reel replacement request signal from the reinforcing bar binding machine 1A, the binding device 100A determines that the replacement of the reel 20 is necessary, and mounts the reinforcing bar binding machine 1A on the binding machine mounting unit 110A in step SA2.

When the binding device 100A detects, by the mounting detection unit 112A, that the reinforcing bar binding machine 1A is mounted at a predetermined position of the binding machine mounting unit 110A by the guide portion 111A and the binding machine detection signal is output, the replacement operation of the reel 20 is executed.

In the reel replacement operation, the binding device 100A outputs, to the reinforcing bar binding machine 1A, a remaining wire discharge signal for executing an operation of discharging the wire W remaining in the reinforcing bar binding machine 1A. When the remaining wire discharge signal is input, the reinforcing bar binding machine 1A drives the cutting unit 6 to cut the wire W, and discharges the wire W remaining inside the reinforcing bar binding machine 1A in step SA3.

That is, the reinforcing bar binding machine 1A moves the sleeve 71 in the forward direction indicated by the arrow A1 by driving the motor 80 in the forward rotation direction, and executes a cutting operation of the wire W by the cutting unit 6. When the wire W remains at a position where the wire W can be cut by the cutting unit 6, the wire W is cut, and the wire W on a twisting unit 7 side from the cutting unit 6 and the wire W on a wire feeding unit 3 side from the cutting unit 6 are separated. After the cutting operation of the wire W is executed by the cutting unit 6, the pair of feeding gears 30 is reversed, and the wire W sandwiched between the pair of feeding gears 30 is fed in the reverse direction. Therefore, the wire W on the wire feeding unit 3 side from the cutting unit 6 is pulled out from between the pair of feeding gears 30. Accordingly, the reel 20 accommodated in the magazine 2 can be taken out.

After the motor 80 is driven in the forward rotation direction by a predetermined amount, the reinforcing bar binding machine 1A drives the motor 80 in a reverse rotation direction to move the sleeve 71 in the rear direction indicated by the arrow A2, and executes an operation of returning the twisting unit 7 to the standby state described above. Accordingly, the locking of wire W on the twisting unit 7 side from the cutting unit 6 is released, and the wire W is discharged to the outside of the main body 10.

When the discharge operation of the wire W remaining in the reinforcing bar binding machine 1A is completed, in step SA4, the binding device 100A opens the lid portion 21 of the magazine 2 by the opening and closing portion 230A. That is, as illustrated in Fig. 3B, the opening and closing portion 230A rotates the lock operation portion 231A in the arrow C1 direction. The lock operation portion 23 rotates the lock portion 22 in the arrow D1 direction by pressing the operated portion 22a of the lock portion 22 by the rotation operation in the arrow C1 direction, and thus moves the lock portion 22 to the open position at which the lock portion 22 is retracted from the opening and closing trajectory of the lid portion 21.

When the lock portion 22 is moved to the open position, the lid portion 21 is opened by a force biased by a spring (not illustrated).

In a state in which the lid portion 21 is opened by being biased by the spring (not illustrated), the opening and closing portion 230A rotates the opening and closing operation portion 232A in the arrow E1 direction. Therefore, as illustrated in Fig. 1D, the lid opening portion 235A enters between the magazine 2 and the lid portion 21 to further open the lid portion 21, and holds the lid portion 21 in the opened state.

The binding device 100A, when the lid portion 21 is opened by the operation of the opening and closing portion 230A, controls the consumable item loading unit 200A so that the reel replacement unit 220A moves the holding portion 221A by the moving portion 222A to a position facing the magazine 2, where the lid portion 21 is opened, of the reinforcing bar binding machine 1A mounted on the binding machine mounting unit 110A. The reel replacement unit 220A orients the holding portion 221A by the moving portion 222A so that the reel 20 accommodated in the magazine 2 can be held. Then, the moving portion 222A moves the holding portion 221A to a position where the holding portion 221A can hold the reel 20, and the holding portion 221A holds a replacement target reel 20 accommodated in the magazine 2. The replacement target reel 20 is a reel 20 where a wire W is used if the wire W wound around the reel 20 is in the predetermined used state. Further, the replacement target reel 20 is a reel 20 wound with a wire W whose type needs to be changed if the type of the wire W wound around the reel 20 is to be changed to another type. Furthermore, the replacement target reel 20 is a reel 20 in which a defect occurs if there is a defect in feeding the wire W.

When the holding portion 221A holds the replacement target reel 20 accommodated in the magazine 2, the reel replacement unit 220A moves, by the moving portion 222A, the holding portion 221A in a direction away from the magazine 2 of the reinforcing bar binding machine 1A as illustrated in Fig. 13A, and, in step SA5, takes out the replacement target reel 20 from the magazine 2 of the reinforcing bar binding machine 1A. As illustrated in Fig. 13B, the reel replacement unit 220A moves, by the moving portion 222A, the holding portion 221A holding the replacement target reel 20 to a predetermined reel placement position, and, in step SA6, separates the replacement target reel 20 from the holding portion 221A.

When the replacement target reel 20 is separated from the holding portion 221A, the reel replacement unit 220A moves the holding portion 221A by the moving portion 222A to a position facing the replacement reel 20 accommodated in the reel storage unit 210A. The reel replacement unit 220A orients the holding portion 221A by the moving portion 222A so that the reel 20 accommodated in the reel storage unit 210A can be held. Then, the moving portion 222A moves the holding portion 221A to a position where the holding portion 221A can hold the reel 20, and the holding portion 221A holds the replacement reel 20 accommodated in the reel storage unit 210A as illustrated in Fig. 13C. The replacement reel 20 is a reel 20 around which a predetermined amount of a wire W is wound if the replacement target reel 20 is the reel 20 in which the wire W is used. Further, the replacement reel 20 is a reel 20 around which a type of wire W to be used at a next timing is wound if the type of the wire W wound around the replacement target reel 20 is changed to another type. Furthermore, the replacement reel 20 is a reel 20 capable of normally feeding the wire W if the replacement target reel 20 is the reel 20 in which the defect occurs.

When the holding portion 221A holds the replacement reel 20 accommodated in the reel storage unit 210A, the reel replacement unit 220A moves, by the moving portion 222A, the holding portion 221A in a direction away from the reel storage unit 210A, and, in step SA7, takes out the replacement reel 20 from the reel storage unit 210A.

The reel replacement unit 220A moves, by the moving portion 222A, the holding portion 221A holding the replacement reel 20 to a position facing the magazine 2, where the lid portion 21 is opened, of the reinforcing bar binding machine 1A mounted on the binding machine mounting unit 110A. The moving portion 222A orients the holding portion 221A so that the held replacement reel 20 can be accommodated in the magazine 2. Then, as illustrated in Fig. 13D, the moving portion 222A moves the holding portion 221A to a position where the held replacement reel 20 can be accommodated in the magazine 2, and, in step SA8, the replacement reel 20 is accommodated in the magazine 2.

After the replacement reel 20 is accommodated in the magazine 2 of the reinforcing bar binding machine 1A mounted on the binding machine mounting unit 110A, the reel replacement unit 220A releases the holding of the reel 20 by the holding portion 221A. Then, the reel replacement unit 220A, by the moving portion 222A, moves the holding portion 221A in the direction away from the reinforcing bar binding machine 1A and returns the holding portion 221A to the standby position.

When the replacement reel 20 is accommodated in the magazine 2 of the reinforcing bar binding machine 1A, as illustrated in Fig. 4, the binding device 100A moves the wire supply unit 240A inside the magazine 2, and, in step SA9, the wire supply unit 240A loads the wire W wound around the replacement reel 20 into the wire feeding unit 3 of the reinforcing bar binding machine 1A.

The binding device 100A, when the wire W wound around the replacement reel 20 is loaded into the wire feeding unit 3 of the reinforcing bar binding machine 1A by the wire supply unit 240A, moves the wire supply unit 240A from the inside to the outside of the magazine 2, and, in step SA10, the opening and closing portion 230A closes the lid portion 21 of the magazine 2. That is, the opening and closing portion 230A rotates the opening and closing operation portion 232A in the arrow E2 direction, thereby pressing the lid portion 21 in the opened state in the closing direction by the lid closing portion 236A to close the lid portion 21.

When the lid portion 21 is closed, the opening and closing portion 230A rotates the lock operation portion 231A in the arrow C2 direction as illustrated in Fig. 3C. The lock operation portion 231A rotates the lock portion 22 in the arrow D2 direction by pressing the operated portion 22a of the lock portion 22 in the rotation operation in the arrow C2 direction, and thus moves the lock portion 22 to the closed position at which the lid portion 21 in the closed state is pressed and held.

When the lock portion 22 moves to the closed position in the operation of the lock operation portion 231A, the opening and closing portion 230A moves the opening and closing operation portion 232A to an initial position as illustrated in Fig. 1C.

When the replacement operation of the reel 20 is executed, the binding device 100A determines whether the reel 20 is normally replaced in step SA11.

When the binding device 100A determines in step SA12 that the reel replacement operation is normally completed, the binding device 100A records and notifies that the replacement of the reel 20 is normally performed in step SA13. Then, the reinforcing bar binding machine 1A is taken out from the binding machine mounting unit 110A by the moving machine 300A or the like in Fig. 6, and, in step SA14, a binding operation is possible.

When the binding device 100A determines in step SA12 that the reel replacement operation is abnormally completed, the binding device 100A records and notifies that an abnormality occurs in the replacement of the reel 20 in step SA15.

### <Application Example of Binding Device According to Embodiment>

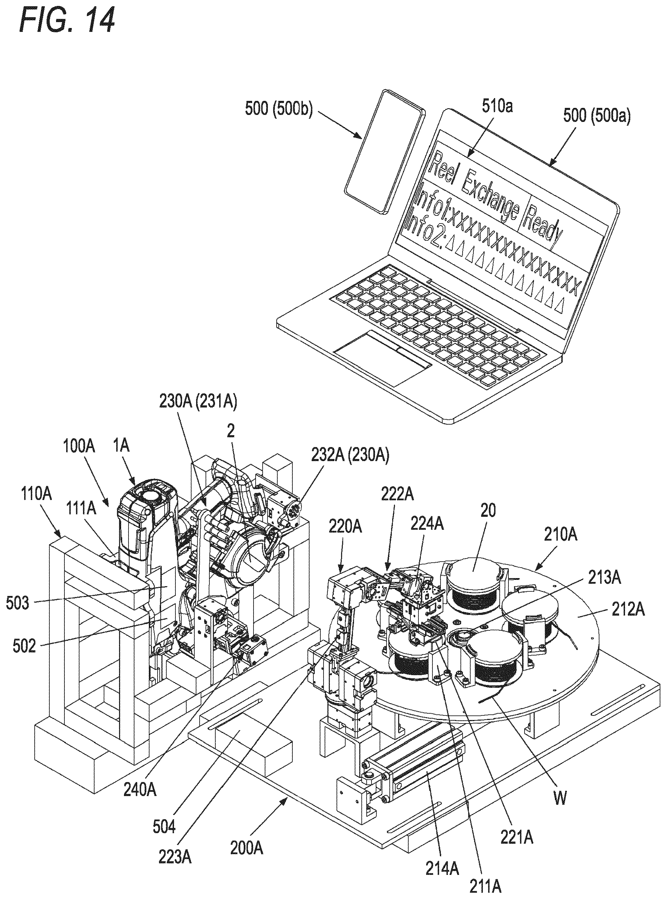

Fig. 14 is a configuration diagram illustrating an example of a binding device including an information communication unit. The binding device 100A may be implemented so that the reinforcing bar binding machine 1A, the reel storage unit 210A, and the reel replacement unit 220A can mutually communicate information and cooperate with each other.

The binding device 100A includes an information acquisition unit 502 that acquires state information indicating various states of the reinforcing bar binding machine 1A, and an information communication unit 503 that performs communication of the state information of the reinforcing bar binding machine 1A. The information acquisition unit 502 and the information communication unit 503 are provided in the reinforcing bar binding machine 1A.

The binding device 100A includes an information communication unit 504 that performs communication of state information indicating various states of the reel storage unit 210A acquired by an information acquisition unit (not illustrated) of the reel storage unit 210A, and state information indicating various states of the reel replacement unit 220A acquired by an information acquisition unit (not illustrated) of the reel replacement unit 220A. The information communication unit 504 is provided in the consumable item loading unit 200A.

The binding device 100A notifies an information processing device 500 of the state information acquired by the information acquisition unit 502 of the reinforcing bar binding machine 1A, the state information acquired by the information acquisition unit (not illustrated) of the reel storage unit 210A, and the state information acquired by the information acquisition unit (not illustrated) of the reel replacement unit 220A. The state information includes the remaining amount of the wire W, the presence or absence and the number of the replacement reel 20 accommodated in the reel storage unit 210A, the position information of the replacement reel 20 accommodated in the reel storage unit 210A, and the like, and consumable item loading information related to the loading of the consumable item. The information processing device 500 includes a personal computer 500a that controls the binding device 100A and notifies a worker of the state of the binding device 100A, and a portable terminal 500b such as a tablet that notifies the worker of the state of the binding device 100A.

The binding device 100A communicates, via the information communication unit 503 and the information communication unit 504, the state information acquired by the information acquisition unit 502 of the reinforcing bar binding machine 1A between the reinforcing bar binding machine 1A and the reel storage unit 210A and the reel replacement unit 220A, between the reinforcing bar binding machine 1A and the information processing device 500, between the reel storage unit 210A and the reel replacement unit 220A and the information processing device 500.

The binding device 100A communicates, via the information communication unit 503 and the information communication unit 504, the state information of the reel storage unit 210A and the state information of the reel exchanging unit 220A between the reinforcing bar binding machine 1A and the reel storage unit 210A and the reel replacement unit 220A, between the reinforcing bar binding machine 1A and the information processing device 500, and between the reel storage unit 210A and the reel replacement unit 220A and the information processing device 500.

Then, based on the state information of the reinforcing bar binding machine 1A, the state information of the reel storage unit 210A, and the state information of the reel replacement unit 220A, the binding device 100A causes the reinforcing bar binding machine 1A, the reel storage unit 210A, and the reel replacement unit 220A to operate in cooperation with each other, such as the determination of whether the reel replacement operation is possible, the execution of the reel replacement operation, and the determination of success or failure of the reel replacement operation. In addition, notification information 510a such as a determination result of whether the reel replacement operation is possible is output as, for example, visible information in the information processing device 500.

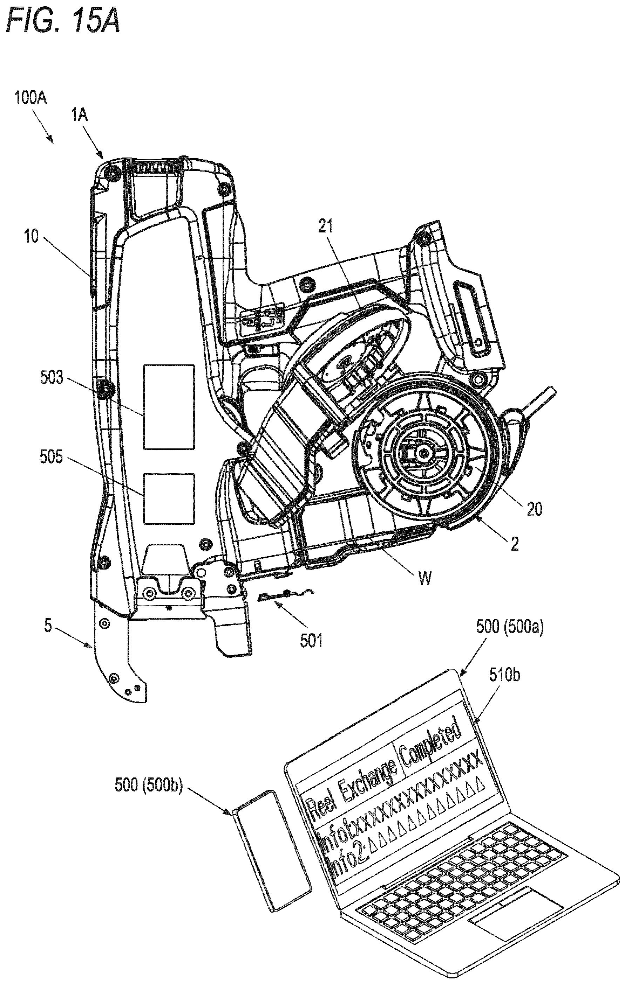

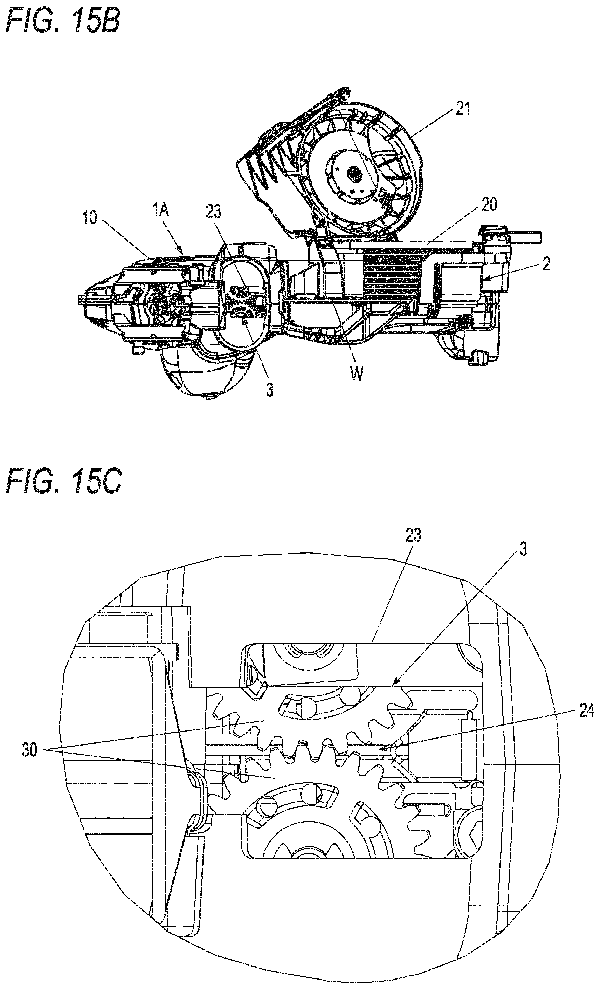

Fig. 15A is a main-part configuration diagram illustrating an example of a binding device including a loading state detection unit. Fig. 15B is a front view of the reinforcing bar binding machine illustrating an example of a wire loading position. Fig. 15C is a main-part front view of the reinforcing bar binding machine illustrating an example of the wire loading position.

The binding device 100A may include a loading state detection unit as a unit that confirms that the reel 20 is replaced and the wire W is loaded in the wire feeding unit 3.

In the reinforcing bar binding machine 1A, the reel 20 is accommodated in the magazine 2, the wire W wound around the reel 20 is drawn out, the wire W is inserted between the pair of feeding gears 30, and the feeding gear 30 is rotated by a feed motor (not illustrated). Therefore, the wire W is sandwiched between the pair of feeding gears 30 to allow the wire W to be fed.

Therefore, the reinforcing bar binding machine 1A includes a window 23 capable of imaging the wire feeding unit 3. The window 23 is formed by providing an opening in a part of the main body 10 and the magazine 2 so that a part of the feeding path of the wire W by the wire feeding unit 3 where the pair of feeding gears 30 as the wire loading position 24 face each other can be seen from the outside of the reinforcing bar binding machine 1A.

The binding device 100A includes a camera 501 that images a state in which the wire W is loaded. The camera 501 is an example of the loading state detection unit, is provided at a position facing the window 23, images the wire loading position 24 through the window 23, and acquires wire loading state image information.

The binding device 100A includes a determination unit 505 that determines whether the wire W is normally loaded based on the wire loading state image information, and the information communication unit 503 that outputs a determination result by the determination unit 505, the wire loading state image information, and the like. The determination unit 505 and the information communication unit 503 may be included in the reinforcing bar binding machine 1A, or the determination unit 505 may be included in the information processing device 500.

As described above, in the operation of loading the wire W wound around the reel 20 into the wire feeding unit 3 of the reinforcing bar binding machine 1A by the wire supply unit 240A, the camera 501 images the wire loading position 24 and acquires the wire loading state image information.

The determination unit 505 determines whether the wire W is normally loaded based on the wire loading state image information, and notifies the information processing device 500 of the determination result by the information communication unit 503.

When the information processing device 500 determines that the wire W is normally loaded based on the wire loading state image information, the information processing device 500 notifies the binding device 100A of an instruction to close the lid portion 21 of the magazine 2.

When the binding device 100A acquires the instruction to close the lid portion 21 of the magazine 2, as described above, the wire supply unit 240A is moved from the inside to the outside of the magazine 2, and the opening and closing portion 230A closes the lid portion 21 of the magazine 2. In addition, the information processing device 500 outputs notification information 510b indicating that the wire W is normally loaded and the reel replacement operation is normally completed as, for example, the visible information.

### <Modifications of Binding Device According to Embodiment>

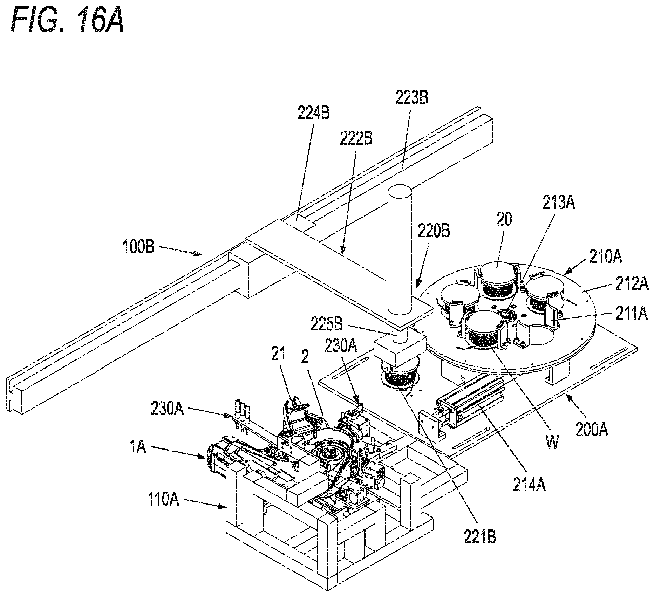

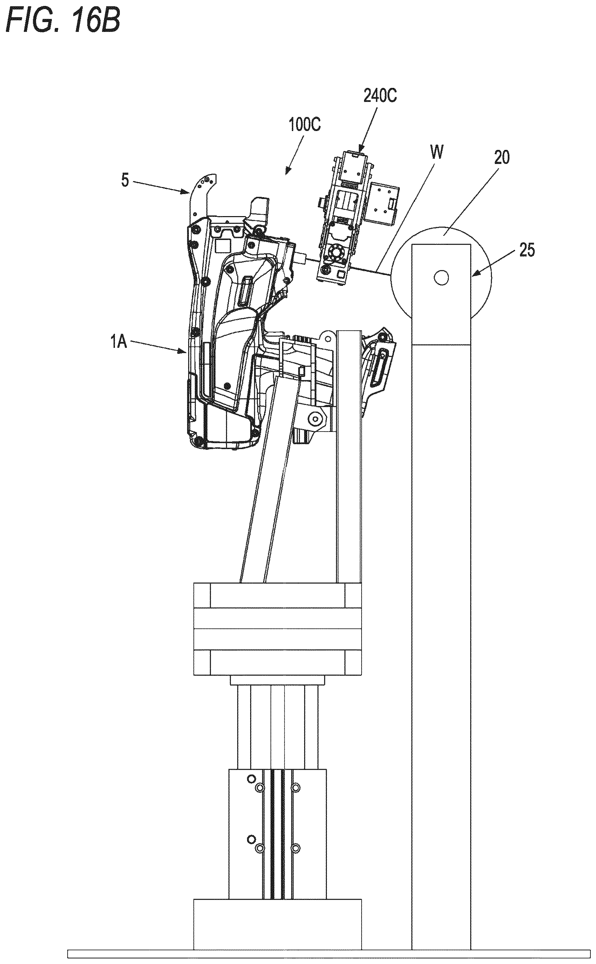

Figs. 16A and 16B are perspective views illustrating modifications of the binding device according to the embodiment. A binding device 100B according to a first modification of the embodiment illustrated in Fig. 16A includes the reinforcing bar binding machine 1A that binds the reinforcing bars S with the wires W, and the binding machine mounting unit 110A to which the reinforcing bar binding machine 1A is detachably mounted. The binding device 100B includes the reel storage unit 210A in which the reels 20 around which the wires W are wound are accommodated, and a reel replacement unit 220B in which the reel 20 accommodated in the reel storage unit 210A is loaded in the reinforcing bar binding machine 1A. In the binding device 100B according to the modification, the binding machine mounting unit 110A and the reel storage unit 210A may have a configuration same as the binding device 100A.

The reel replacement unit 220B is an example of a consumable item loading unit, and takes out the reel 20 accommodated in the magazine 2 based on the state of the wire W as the state of the consumable item, such as a remaining amount of the wire W of the reinforcing bar binding machine 1A, a type of the wire W, and the presence or absence of a defect in feeding of the wire W caused by the state of the wire W wound around the reel 20, and loads the wire W into the reinforcing bar binding machine 1A by replacing the reel 20 with the new reel 20 accommodated in the reel storage unit 210A.

The reel replacement unit 220B includes a holding portion 221B that detachably holds the reel 20 in order to replace the reel 20 accommodated in the magazine 2, and a moving portion 222B that moves the holding portion 221B at least between the magazine 2 of the reinforcing bar binding machine 1A and the reel storage unit 210A.

The holding portion 221B includes, for example, a pair of claw portions that move in a direction toward and a direction away from each other, and holds the reel 20 between the pair of claw portions.

The moving unit 222B includes a first moving portion 224B that moves the holding portion 221B along a guide rail 223B that extends along a direction in which the binding machine mounting unit 110A and the reel storage unit 210A are arranged, and a second moving portion 225B that moves the holding portion 221B along a direction toward and a direction away from the reel storage unit 210A and moves the reinforcing bar binding machine 1A mounted on the binding machine mounting unit 110A along a direction toward and a direction away from the magazine 2.

The moving portion 222B can move the holding portion 221B to a position facing a pickup position of the reel 20 accommodated in the reel storage unit 210A, and can move the holding portion 221B in a direction toward and a direction away from the pickup position of the reel 20, and can hold the reel 20 by the holding portion 221B and take out the reel 20 from the reel storage unit 210A.

The moving portion 222B can move the holding portion 221B to a position facing the magazine 2 of the reinforcing bar binding machine 1A mounted on the binding machine mounting unit 110A, and can move the holding portion 221B in a direction toward and a direction away from the magazine 2, and can hold the replacement target reel 20 by the holding portion 221B and take out the reel 20 from the magazine 2. In addition, the new reel 20 around which the wire W is wound can be held by the holding portion 221B and accommodated in the magazine 2.

A binding device 100C according to a second modification of the embodiment illustrated in Fig. 16B has a configuration in which a reel accommodation unit 25 accommodating the reel 20 around which the wire W is wound is independent of the reinforcing bar binding machine 1A. The reel accommodation unit 25 is an example of a consumable item accommodation unit (first accommodation unit), and detachably accommodates the reel 20 around which the wire W is wound.

The binding device 100C includes a wire supply unit 240C that loads the wire W wound around the reel 20 accommodated in the reel accommodation unit 25 into the reinforcing bar binding machine 1A. The wire supply unit 240C is provided between the reinforcing bar binding machine 1A and the reel accommodation unit 25, and includes a roller (not illustrated) for drawing out the wire W wound around the reel 20 accommodated in the reel accommodation unit 25 and loading the wire W into the wire feeding unit of the reinforcing bar binding machine 1A, a motor for driving the roller, and the like.

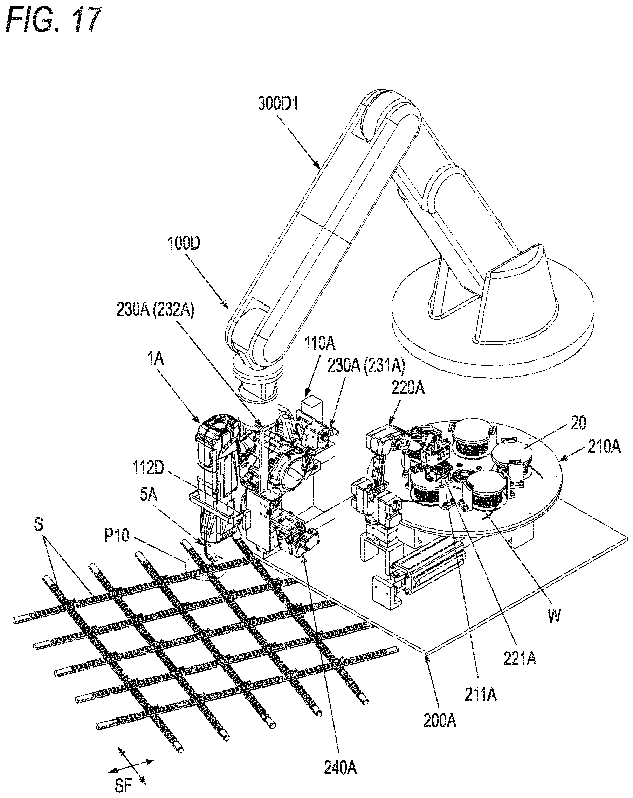

Fig. 17 is a perspective view illustrating another modification of the binding device according to the embodiment. A binding device 100D according to another modification includes the binding machine mounting unit 110A to which the reinforcing bar binding machine 1A for binding the reinforcing bars S with the wire W is detachably mounted. The reinforcing bar binding machine 1A is mounted on the binding machine mounting unit 110A in such a manner that the curl forming unit 5 of the reinforcing bar binding machine 1A is exposed. Accordingly, the binding device 100D can perform a binding operation by the reinforcing bar binding machine 1A in a state in which the reinforcing bar binding machine 1A is mounted on the binding machine mounting unit 110A.

The binding device 100D includes the consumable item loading unit 200A that loads the wire W into the reinforcing bar binding machine 1A by replacing the reel 20. The consumable item loading unit 200A includes the reel storage unit 210A in which the reels 20 around which the wires W are wound are accommodated, and the reel replacement unit 220A in which the reel 20 accommodated in the reel storage unit 210A is loaded in the reinforcing bar binding machine 1A. In the binding device 100D according to the modification, the consumable item loading unit 200A may have the configuration same as that of the binding device 100A.

The binding machine mounting unit 110A includes a mounting detection unit 112D that detects whether the reinforcing bar binding machine 1A is mounted. The mounting detection unit 112D detects that the reinforcing bar binding machine 1A is mounted at a position where the binding operation by the reinforcing bar binding machine 1A and the replacement operation of the reel 20 by the consumable item loading unit 200A can be performed, and outputs a binding machine detection signal.

The binding device 100D further includes a moving machine 300D1 that moves the reinforcing bar binding machine 1A mounted on the binding machine mounting unit 110A to the binding position P10. In the binding device 100D, for example, the reinforcing bar binding machine 1A is mounted on the moving machine 300D1, the reinforcing bar binding machine 1A is mounted on the binding machine mounting unit 110A, and the binding machine mounting unit 110A and the consumable item loading unit 200A are implemented as one device and a system. Accordingly, in the binding device 100D, the reinforcing bar binding machine 1A and the consumable item loading unit 200A mounted on the binding machine mounting unit 110A are integrally moved by the moving machine 300D1.

The moving machine 300D1 is constituted by, for example, a device called a robot arm or the like in which a plurality of arms are rotatably coupled to each other via a joint portion constituting a shaft. The moving machine 300D1 moves the reinforcing bar binding machine 1A to the binding position P10 by moving the reinforcing bar binding machine 1A mounted on the binding machine mounting unit 110A in a direction toward and a direction away from the arrangement plane SF of the reinforcing bars S in a direction along the arrangement plane SF.

The binding device 100D can execute the above-described binding operation in the reinforcing bar binding machine 1A by moving the reinforcing bar binding machine 1A mounted on the binding machine mounting unit 110A to the binding position P10. In the binding device 100D, the reinforcing bar binding machine 1A and the consumable item loading unit 200A mounted on the binding machine mounting unit 110A are integrally moved by the moving machine 300D1. Accordingly, regardless of the position of the reinforcing bar binding machine 1A, it is possible to take out the replacement target reel 20 accommodated in the magazine 2 based on the remaining amount of the wire W accommodated in the magazine 2 of the reinforcing bar binding machine 1A, replace the replacement reel 20 accommodated in the reel storage unit 210A, and load the wire W in the magazine 2.

The above-described binding device 100A is not limited to being used by being incorporated into a device or a system that binds the reinforcing bars S, and can be used in an environment in which a person uses the reinforcing bar binding machine 1A by hand.

That is, when a person performs the binding operation by holding the reinforcing bar binding machine 1A by hand, and the replacement of the reel 20 is necessary based on the remaining amount of the wire W or the like, the person mounts the reinforcing bar binding machine 1A on the binding machine mounting unit 110A. When the reinforcing bar binding machine 1A is mounted on the binding machine mounting unit 110A, the consumable item loading unit 200A may take out the replacement target reel 20 accommodated in the magazine 2, replace the replacement target reel 20 accommodated in the reel storage unit 210A with the replacement reel 20, and load the wire W in the magazine 2.

## Claims

1. A binding device (100A, 100A1, 100A2, 100A3, 100A4, 100B, 100C, 100D) comprising:
a reinforcing bar binding machine (1A) configured to bind reinforcing bars with a wire;
a binding machine mounting unit (110A) to which the reinforcing bar binding machine is detachably mounted;
a consumable item accommodation unit (2, 25) in which a reel (20) around which the wire is wound can be accommodated, which wire is to be supplied to the reinforcing bar binding machine;
**characterized in that** the binding device further comprises:
a loading consumable item accommodation unit (210A) configured to accommodate replacement reels (20) with a wire wound around the replacement reels, which replacement reels are to be loaded into the consumable item accommodation unit; and
a loading unit (200A) configured to load one of the replacement reels accommodated in the loading consumable item accommodation unit into the consumable item accommodation unit.

2. The binding device according to claim 1, wherein
the loading unit is configured to load, based on a state of the wire wound on the reel, one of the replacement reels accommodated in the loading consumable item accommodation unit into the consumable item accommodation unit.

3. The binding device according to claim 2, wherein
the loading unit is configured to load, based on a remaining amount of the wire wound on the reel, one of the replacement reels accommodated in the loading consumable item accommodation unit into the consumable item accommodation unit.

4. The binding device according to claim 2, wherein
the loading unit is configured to load, based on is a type of the wire wound on the reel, one of the replacement reels accommodated in the loading consumable item accommodation unit into the consumable item accommodation unit.

5. The binding device according to claim 2, wherein
the loading unit is configured to load, based on presence or absence of a defect in the wire wound on the reel, one of the replacement reels accommodated in the loading consumable item accommodation unit into the consumable item accommodation unit.

6. The binding device according to claim 1, wherein
the consumable item accommodation unit and the loading consumable item accommodation unit are configured to detachably accommodate the corresponding reel, and
the loading unit is configured to take out the reel accommodated in the consumable item accommodation unit, and is configured to load the reel accommodated in the loading consumable item accommodation unit into the consumable item accommodation unit.

7. The binding device according to claim 6, wherein
the loading unit is configured to take out, based on a state of the wire wound around the reel accommodated in the consumable item accommodation unit, the reel from the consumable item accommodation unit, and to load one of the replacement reels accommodated in the loading consumable item accommodation unit into the consumable item accommodation unit.

8. The binding device according to claim 7, wherein
the loading unit is configured to take out, based on a remaining amount of the wire wound on the reel, the reel from the consumable item accommodation unit.

9. The binding device according to claim 7, wherein
the loading unit is configured to take out, based on a type of the wire wound on the reel, the reel from the consumable item accommodation unit.

10. The binding device according to claim 7, wherein
the loading unit is configured to take out, based on presence or absence of a defect in the wire wound on the reel, the reel from the consumable item accommodation unit.

11. The binding device according to any one of claims 1 to 10, wherein
the reinforcing bar binding machine includes the consumable item accommodation unit.

12. The binding device according to any one of claims 1 to 10, further comprising:
a supply unit configured to supply the reel around which the wire is wound from the consumable item accommodation unit to the reinforcing bar binding machine.

13. The binding device according to any one of claims 1 to 8, further comprising:
an information communication unit (503, 504) configured to perform communication of consumable item loading information related to loading of the wire among the reinforcing bar binding machine, the consumable item accommodation unit, the loading consumable item accommodation unit, and the loading unit.

14. A wire loading method, in which a replacement reel with a wire wound thereon is loaded into the consumable item accommodation unit of the binding device according to claim 1, the wire loading method comprising:
providing a binding device according to claim 1;
loading, based on a state of a wire wound on a reel accommodated in the consumable item accommodation unit, one of the replacement reels with wires wound thereon accommodated in the loading consumable item accommodation unit into the consumable item accommodation unit with the loading unit.

15. The wire loading method according to claim 14, wherein
based on a remaining amount of the wire wound on the reel, one of the replacement reels accommodated in the loading consumable item accommodation unit is loaded into the consumable item accommodation unit.

16. The wire loading method according to claim 14, wherein
based on a type of the wire wound on the reel, one of the replacement reels accommodated in the loading consumable item accommodation unit is loaded into the consumable item accommodation unit.

17. The wire loading method according to claim 14, wherein
based on presence or absence of a defect in the wire wound on the reel, one of the replacement reels accommodated in the loading consumable item accommodation unit is loaded into the consumable item accommodation unit.

18. The wire loading method according to claim 14, wherein
the consumable item accommodation unit and the loading consumable item accommodation unit detachably accommodate the corresponding reel, and
the reel accommodated in the consumable item accommodation unit is taken out, and the reel accommodated in the loading consumable item accommodation unit is loaded into the consumable item accommodation unit.

## Patentansprüche

1. Eine Bindevorrichtung (100A, 100A1, 100A2, 100A3, 100A4, 100B, 100C, 100D), umfassend:
eine Bewehrungsstab-Bindemaschine (1A), die zum Binden von Bewehrungsstäben mit einem Draht konfiguriert ist;
eine Bindemaschine-Befestigungseinheit (110A), an der die Bewehrungsstab-Bindemaschine abnehmbar befestigt ist;
eine Verbrauchsmaterial-Aufnahmeeinheit (2, 25), in der eine Rolle (20) aufgenommen werden kann, um die der Draht gewickelt ist, der der Bewehrungsstahl-Bindemaschine zugeführt werden soll;
**dadurch gekennzeichnet, dass** die Bindevorrichtung ferner umfasst:
eine Nachfüll-Verbrauchsmaterial-Aufnahmeeinheit (210A), die so konfiguriert ist, dass sie Ersatzrollen (20) mit einem um die Ersatzrollen gewickelten Draht aufnehmen kann, wobei die Ersatzrollen in die Verbrauchsmaterial-Aufnahmeeinheit geladen werden sollen; und
eine Ladeeinheit (200A), die so konfiguriert ist, dass sie eine der in der Nachfüll-Verbrauchsmaterial-Aufnahmeeinheit aufgenommenen Ersatzrollen in die Verbrauchsmaterial-Aufnahmeeinheit lädt.

2. Bindevorrichtung gemäß Anspruch 1, wobei
die Ladeeinheit so konfiguriert ist, dass sie basierend auf einem Zustand des auf die Rolle gewickelten Drahtes eine der in der Nachfüll-Verbrauchsmaterial-Aufnahmeeinheit aufgenommenen Ersatzrollen in die Verbrauchsmaterial-Aufnahmeeinheit lädt.

3. Bindevorrichtung gemäß Anspruch 2, wobei
die Ladeeinheit so konfiguriert ist, dass sie basierend auf einer Restmenge des auf der Rolle aufgewickelten Drahtes eine der in der Nachfüll-Verbrauchsmaterial-Aufnahmeeinheit untergebrachten Ersatzrollen in die Verbrauchsmaterial-Aufnahmeeinheit lädt.

4. Bindevorrichtung gemäß Anspruch 2, wobei
die Ladeeinheit so konfiguriert ist, dass sie basierend auf einem Typ des auf der Rolle aufgewickelten Drahtes eine der in der Nachfüll-Verbrauchsmaterial-Aufnahmeeinheit untergebrachten Ersatzrollen in die Verbrauchsmaterial-Aufnahmeeinheit lädt.

5. Bindevorrichtung gemäß Anspruch 2, wobei
die Ladeeinheit so konfiguriert ist, dass sie basierend auf dem Vorhandensein oder Fehlen eines Defekts in dem auf der Rolle aufgewickelten Draht eine der in der Nachfüll-Verbrauchsmaterial-Aufnahmeeinheit untergebrachten Ersatzrollen in die Verbrauchsmaterial-Aufnahmeeinheit lädt.

6. Bindevorrichtung gemäß Anspruch 1, wobei
die Verbrauchsmaterial-Aufnahmeeinheit und die Nachfüll-Verbrauchsmaterial-Aufnahmeeinheit so konfiguriert sind, dass sie die entsprechende Rolle lösbar aufnehmen, und
die Ladeeinheit so konfiguriert ist, dass sie die in der Verbrauchsmaterial-Aufnahmeeinheit aufgenommene Rolle herausnimmt und die in der Nachfüll-Verbrauchsmaterial-Aufnahmeeinheit aufgenommene Rolle in die Verbrauchsmaterial-Aufnahmeeinheit lädt.

7. Bindevorrichtung gemäß Anspruch 6, wobei
die Ladeeinheit so konfiguriert ist, dass sie basierend auf einem Zustand des um die in der Verbrauchsmaterial-Aufnahmeeinheit aufgenommenen Rollen gewickelten Drahtes die Rolle aus der Verbrauchsmaterial-Aufnahmeeinheit entnimmt und eine der in der Nachfüll-Verbrauchsmaterial-Aufnahmeeinheit aufgenommenen Ersatzrollen in die Verbrauchsmaterial-Aufnahmeeinheit lädt.

8. Bindevorrichtung gemäß Anspruch 7, wobei
die Ladeeinheit so konfiguriert ist, dass sie basierend auf einer Restmenge des auf der Rolle aufgewickelten Drahtes die Rolle aus der Verbrauchsmaterial-Aufnahmeeinheit entnimmt.

9. Bindevorrichtung gemäß Anspruch 7, wobei
die Ladeeinheit so konfiguriert ist, dass sie die Rolle basierend auf einem Typ des auf der Rolle aufgewickelten Drahtes aus der Verbrauchsmaterial-Aufnahmeeinheit entnimmt.

10. Bindevorrichtung gemäß Anspruch 7, wobei
die Ladeeinheit so konfiguriert ist, dass sie die Rolle aus der Verbrauchsmaterial-Aufnahmeeinheit herausnimmt, basierend auf dem Vorhandensein oder Fehlen eines Defekts in dem auf die Rolle gewickelten Draht.

11. Bindevorrichtung gemäß einem der Ansprüche 1 bis 10, wobei
die Bewehrungsstab-Bindemaschine die Verbrauchsmaterial-Aufnahmeeinheit umfasst.

12. Bindevorrichtung gemäß einem der Ansprüche 1 bis 10, die ferner umfasst:
eine Zuführeinheit, die so konfiguriert ist, dass sie die Rolle, um die der Draht gewickelt ist, von der Verbrauchsmaterial-Aufnahmeeinheit zur Bindemaschine für Bewehrungsstäbe zuführt.

13. Bindevorrichtung gemäß einem der Ansprüche 1 bis 8, die ferner umfasst:
eine Informationskommunikationseinheit (503, 504), die so konfiguriert ist, dass sie die Kommunikation von Verbrauchsmaterial-Ladeinformationen in Bezug auf das Laden des Drahtes zwischen der Bewehrungsstab-Bindemaschine, der Verbrauchsmaterial-Aufnahmeeinheit, der Nachfüll-Verbrauchsmaterial-Aufnahmeeinheit und der Ladeeinheit durchführt.

14. Ein Verfahren zum Laden von Draht, bei dem eine Ersatzrolle mit einem darauf gewickelten Draht in die Verbrauchsmaterial-Aufnahmeeinheit der Bindevorrichtung gemäß Anspruch 1 geladen wird, wobei das Drahtladeverfahren umfassend:
Bereitstellen einer Bindevorrichtung gemäß Anspruch 1;
das Laden einer der Ersatzrollen mit darauf aufgewickeltem Draht, die in der Nachfüll-Verbrauchsmaterial-Aufnahmeeinheit untergebracht sind, in die Verbrauchsmaterial-Aufnahmeeinheit mit der Ladeeinheit, basierend auf dem Zustand eines auf einer in der Verbrauchsmaterial-Aufnahmeeinheit untergebrachten Rolle aufgewickelten Drahtes.

15. Verfahren zum Laden von Draht gemäß Anspruch 14, wobei
auf der Grundlage einer Restmenge des auf der Rolle aufgewickelten Drahtes eine der in der Nachfüll-Verbrauchsmaterial-Aufnahmeeinheit aufgenommenen Ersatzrollen in die Verbrauchsmaterialaufnahmeeinheit geladen wird.

16. Verfahren zum Laden von Draht gemäß Anspruch 14, wobei
basierend auf einem Typ des auf die Rolle gewickelten Drahtes eine der in der Verbrauchsmaterial-Aufnahmeeinheit untergebrachten Ersatzrollen in die Verbrauchsmaterial-Aufnahmeeinheit geladen wird.

17. Verfahren zum Laden von Draht gemäß Anspruch 14, wobei
basierend auf dem Vorhandensein oder Fehlen eines Defekts in dem auf die Rolle gewickelten Draht, eine der in der Verbrauchsmaterial-Aufnahmeeinheit untergebrachten Ersatzrollen in die Verbrauchsmaterial-Aufnahmeeinheit geladen wird.

18. Verfahren zum Laden von Draht gemäß Anspruch 14, wobei
die Verbrauchsmaterial-Aufnahmeeinheit und die Nachfüll-Verbrauchsmaterial-Aufnahmeeinheit die entsprechende Rolle abnehmbar aufnehmen und
die in der Verbrauchsmaterial-Aufnahmeeinheit untergebrachte Rolle herausgenommen wird und die in der Nachfüll-Verbrauchsmaterial-Aufnahmeeinheit untergebrachte Rolle in die Verbrauchsmaterial-Aufnahmeeinheit geladen wird.

## Revendications

1. Dispositif de liaison (100A, 100A1, 100A2, 100A3, 100A4, 100B, 100C, 100D) comportant :
une relieuse de barres de renfort (1A) configurée pour relier des barres de renfort avec un fil ;
une unité de montage de relieuse (110A) sur laquelle la relieuse de barres de renfort est montée de manière détachable ;
une unité de logement d'article consommable (2, 25) dans laquelle peut être logée une bobine (20) autour de laquelle le fil est enroulé, lequel fil doit être fourni à la relieuse de barres de renfort ;
**caractérisé en ce que** le dispositif de liaison comporte en outre :
une unité de logement d'articles consommables de chargement (210A) configurée pour loger des bobines de rechange (20) avec un fil enroulé autour des bobines de rechange, lesquelles bobines de rechange doivent être chargées dans l'unité de logement d'article consommable ; et
une unité de chargement (200A) configurée pour charger l'une des bobines de rechange logées dans l'unité de logement d'articles consommables de chargement dans l'unité de logement d'article consommable.

2. Dispositif de liaison selon la revendication 1, dans lequel
l'unité de chargement est configurée pour charger, sur la base d'un état du fil enroulé sur la bobine, l'une des bobines de rechange logées dans l'unité de logement d'articles consommables de chargement dans l'unité de logement d'article consommable.

3. Dispositif de liaison selon la revendication 2, dans lequel
l'unité de chargement est configurée pour charger, dans l'unité de logement d'article consommable, sur la base d'une quantité restante du fil enroulé sur la bobine, l'une des bobines de rechange logées dans l'unité de logement d'articles consommables de chargement.

4. Dispositif de liaison selon la revendication 2, dans lequel
l'unité de chargement est configurée pour charger, dans l'unité de logement d'article consommable, sur la base d'un type du fil enroulé sur la bobine, l'une des bobines de rechange logées dans l'unité de logement d'articles consommables de chargement.

5. Dispositif de liaison selon la revendication 2, dans lequel
l'unité de chargement est configurée pour charger, dans l'unité de logement d'article consommable, sur la base de la présence ou de l'absence d'un défaut dans le fil enroulé sur la bobine, l'une des bobines de rechange logées dans l'unité de logement d'articles consommables de chargement.

6. Dispositif de liaison selon la revendication 1, dans lequel
l'unité de logement d'article consommable et l'unité de logement d'articles consommables de chargement sont configurées pour loger de manière détachable la bobine correspondante, et
l'unité de chargement est configurée pour extraire la bobine logée dans l'unité de logement d'article consommable et est configurée pour charger, dans l'unité de logement d'article consommable, la bobine logée dans l'unité de logement d'articles consommables de chargement.

7. Dispositif de liaison selon la revendication 6, dans lequel
l'unité de chargement est configurée pour extraire, sur la base d'un état du fil enroulé autour de la bobine logée dans l'unité de logement d'article consommable, la bobine de l'unité de logement d'article consommable, et pour charger, dans l'unité de logement d'article consommable, l'une des bobines de rechange logées dans l'unité de logement d'articles consommables de chargement.

8. Dispositif de liaison selon la revendication 7, dans lequel
l'unité de chargement est configurée pour extraire, sur la base d'une quantité restante du fil enroulé sur la bobine, la bobine de l'unité de logement d'article consommable.

9. Dispositif de liaison selon la revendication 7, dans lequel
l'unité de chargement est configurée pour extraire, sur la base d'un type du fil enroulé sur la bobine, la bobine de l'unité de logement d'article consommable.

10. Dispositif de liaison selon la revendication 7, dans lequel
l'unité de chargement est configurée pour extraire, sur la base de la présence ou de l'absence d'un défaut dans le fil enroulé sur la bobine, la bobine de l'unité de logement d'article consommable.

11. Dispositif de liaison selon l'une quelconque des revendications 1 à 10, dans lequel
la relieuse de barres de renfort inclut l'unité de logement d'article consommable.

12. Dispositif de liaison selon l'une quelconque des revendications 1 à 10, comportant en outre :
une unité d'alimentation configurée pour fournir la bobine autour de laquelle le fil est enroulé de l'unité de logement d'article consommable à la relieuse de barres de renfort.

13. Dispositif de liaison selon l'une quelconque des revendications 1 à 8, comportant en outre :
une unité de communication d'informations (503, 504) configurée pour réaliser la communication d'informations de chargement d'articles consommables liées au chargement du fil entre la relieuse de barres de renfort, l'unité de logement d'article consommable, l'unité de logement d'articles consommables de chargement et l'unité de chargement.

14. Procédé de chargement de fil, dans lequel une bobine de rechange sur laquelle un fil est enroulé est chargée dans l'unité de logement d'article consommable du dispositif de liaison selon la revendication 1, le procédé de chargement de fil comportant :
la fourniture d'un dispositif de liaison selon la revendication 1 ;
le chargement, sur la base d'un état d'un fil enroulé sur une bobine logée dans l'unité de logement d'article consommable, dans l'unité de logement d'article consommable au moyen de l'unité de chargement, de l'une des bobines de rechange avec des fils enroulés dessus logées dans l'unité de logement d'articles consommables de chargement.

15. Procédé de chargement de fil selon la revendication 14, dans lequel sur la base d'une quantité restante du fil enroulé sur la bobine, l'une des bobines de rechange logées dans l'unité de logement d'articles consommables de chargement est chargée dans l'unité de logement d'article consommable.

16. Procédé de chargement de fil selon la revendication 14, dans lequel sur la base d'un type du fil enroulé sur la bobine, l'une des bobines de rechange logées dans l'unité de logement d'articles consommables de chargement est chargée dans l'unité de logement d'article consommable.

17. Procédé de chargement de fil selon la revendication 14, dans lequel
sur la base de la présence ou de l'absence d'un défaut dans le fil enroulé sur la bobine, l'une des bobines de rechange logées dans l'unité de logement d'articles consommables de chargement est chargée dans l'unité de logement d'article consommable.

18. Procédé de chargement de fil selon la revendication 14, dans lequel
l'unité de logement d'article consommable et l'unité de logement d'articles consommables de chargement logent de manière détachable la bobine correspondante, et
la bobine logée dans l'unité de logement d'article consommable est extraite, et la bobine logée dans l'unité de logement d'articles consommables de chargement est chargée dans l'unité de logement d'article consommable.
